# EUROPEAN PATENT SPECIFICATION

(11) **EP 1 155 534 B1**
(45) Date of publication and mention of the grant of the patent: **16.01.2008**
(21) Application number: 00911713.6
(22) Date of filing: 03.02.2000
(51) Int. Cl.: H04L 12/28, H04L 12/24, G06F 9/46

(54) **AUDIO VISUAL ARCHITECTURE**
AUDIOVISUELLE ARCHITEKTUR
ARCHITECTURE AUDIOVISUELLE

(30) Priority: 03.02.1999 US 118668 P; 28.05.1999 US 322852; 28.05.1999 US 322964; 28.05.1999 US 322207; 28.05.1999 US 322459; 28.05.1999 US 322643; 28.05.1999 US 322965; 28.05.1999 US 322962; 28.05.1999 US 322455; 28.05.1999 US 322457
(43) Date of publication of application: 21.11.2001
(73) Proprietor: Gates, William H., III, Medina, WA 98039 (US)
(72) Inventor: HASHA, Richard, Seattle, WA 98102 (US)
(74) Representative: Grünecker, Kinkeldey, Stockmair & Schwanhäusser Anwaltssozietät
(86) International application number: PCT/US2000/003088
(87) International publication number: WO 2000/046960

(56) References cited:
- EP-A- 0 854 607
- WO-A-97/31451
- US-A- 5 621 662
- FRIESEN J. A., YANG C. L., CLINE R. E. JR.: "DAVE: A PLUG-AND-PLAY MODEL FOR DISTRIBUTED MULTIMEDIA APPLICATION DEVELOPMENT" IEEE PARALLEL AND DISTRIBUTED TECHNOLOGY: SYSTEMS AND APPLICATIONS, 1995, pages 22-28-28, XP002125719 ISSN: 1063-6552
- SONY, PHILIPS, HITACHI, SHARP, MATSUSHITA, THOMSON, TOSHIBA, GRUNDIG: "THE HAVI SPECIFICATION. SPECIFICATION OF THE HOME AUDIO/VIDEO INTEROPERABILITY (HAVI) ARCHITECTURE. VERSION 1.0 BETA." HAVI ORGANIZATION, SAN RAMON, CA, US, 19 November 1998 (1998-11-19), XP002116332
- ANSELL J., OZDAMAR M.: "AN ARCHITECTURE FOR THE DESIGN OF TMN APPLICATIONS" PROCEEDINGS OF THE INTERNATIONAL CONFERENCE ON COMMUNICATIONS (ICC), US, NEW YORK, IEEE, 1993, pages 1635-1639, XP000448407 ISBN: 0-7803-0950-2
- AUER S., HASLER J., RUOPP G.: "DAS INFORMATIONSMODELL: EIN KONZEPT FUER DAS MANAGEMENT OFFENER KOMMUNIKATIONSSYSTEME" FREQUENZ, DE, SCHIELE UND SCHON GMBH., BERLIN, DE, vol. 47, no. 1/2, January 1993 (1993-01), pages 49-57, XP000349214 ISSN: 0016-1136
- SCHAPALER G., KEHL W., AZARMI N.: "MODEL BASED MAINTENANCE FOR MANS" ELECTRICAL COMMUNICATION, PARIS, FR, July 1993 (1993-07), pages 268-277, XP000394420

## Description

The described technology is related to audio/visual systems.

A large environment, such as a large building or a large house, may have many audio/video devices located throughout the environment. These AV devices may include CD players, speaker systems, computer systems, television receivers, satellite receivers, displays, and so on. In addition, many sources of media may be available. One such media is a jukebox containing a variety of compact discs. The AV devices typically provide a control panel through which the device can be control. For example, a CD player provides a control panel that allows a CD to be started, paused, or stopped. Typically, the interconnections between the AV devices are static. That is, when the AV devices are installed, cabling is routed between devices. For example, speaker wire may be routed between an amplifier and speakers.

A problem with such static interconnections it is very expensive and difficult to provide all the desired interconnections and to change connections. Another problem is that it is cumbersome to use only the control panels to control the devices. It would be desirable to have an architecture that would support the dynamic interconnection between devices.

Friesen J. A., Yang C. L., CLINE R. E. JR.: "Dave: A Plug-and Play Model for Distributed Multimedia Application Development" IEEE Parallel and Distributed Technology: Systems and Applications, 1995, pages 22-28-28 discloses a Distributed Audio Video Environment for developing applications. DAVE provides a distributed plug-and-play application programming interface, is object-oriented, offers device and media extensibility, uses traditional Unix network facilities for transmission, and employs existing audio and video hardware commonly found on many workstations. Application developers can treat media devices (such as cameras and microphones) as distributed resources, much as workstations treat graphics and windows. Through inheritance and data independence, developers can define additional devices and media types and integrate them into the environment. This plug-and-play approach provides for dynamically changing applications at runtime.

Sony, Philips, Hitachi, Sharp, Matsushita, Thomson, Toshiba, Grundig: "The HAVI Specification, Specification of the Home Audio/Video Interoperability (HAVI) Architecture. Version 1.0 Beta." HAVI Organization, San Ramon, CA, US, 19 November 1998 describes the home audio/video interoperability (HAVI) architecture that provides a set of services which facilitate interoperability and the development of distributed applications on home networks. The HAVI architecture comprises a set of software elements needed to achieve said interoperability, including an event manager that provides an event delivery service. The delivery of an event representing a change of state of a software element or of the home network is done either locally within a single device or globally to all devices in the network.

US-A-6 621 662 discloses a home automation system comprising a number of sub-systems for controlling various aspects of a house, such as a security sub-system, an HVAC sub-system, a lighting control sub-system and an entertainment sub-system. The network comprises a host computer connected through a host interface to a plurality of nodes. Each hardware device has a mirror image software object in the host computer to which messages are directed. The user interfaces for the various sub-systems share a common interfacing method.

EP-A-0 854 607 discloses a method for configuring communication networks, wherein network components can be configured via interfaces,

Ansell J., Ozdamer M.: "An Architecture for the Design of TMN Applications" Proceedings of the international Conference on Communications (ICC), US, New York, IEEE, 1993, pages 1635-1639 discloses an architecture for the production of applications for the TMN (Telecommunications Management Network). It starts from the concept of model based management, described in the RACE project - ADVANCE which suggests that a network should be managed by manipulating a model of that network. The application architecture is described in terms of information models. An information model is a set of related object class definitions that define the interfaces to the components in the application architecture.

AUER S., Hasler J., RUOPP G.: "Das Informationsmodell: Ein Konzept fuer das Management Offener Kommunikationssysteme" Frequenz, DE, Schiele und Schon GMBH., Berlin, DE, vol. 47, no. 1/2, January 1993, pages 49 to 57 discloses an information model as a concept for managing open communications systems.

Schapaler G., Kehl W., Azarmi N.: "Model Based Maintenance for MANS" Electrical Communication, Paris, FR, July 1993, pages 268 to 277 discloses a model based maintenance for MANS.

WO 97/31451 A discloses a system and method for managing a telecommunication network. The system and method employs a network management architecture that provides an overlay in which network management functions are performed.

It is the object of the present invention to provide an improved audio/visual system and a corresponding method for establishing a path between a source component and an input component in the audio/visual system.

This object is solved by the subject matter of the independent claims 1 and 22.

Preferred embodiments are defined in the dependent claims.
Figure 1 is a block diagram illustrating network layer objects that model the path between output components, switching mechanisms, and input components.
Figure 2 is a block diagram illustrating the session layer objects that represent virtual circuits.
Figure 3 is a block diagram illustrating management laser objects.
Figure 4 is a diagram illustrating the establishment of a path between an output component and an input component.
Figure 5 is a flow diagram representing a function of a complete source port object for creating a virtual circuit object.
Figure 6 is a flow diagram of example implementation of the constructor for a virtual circuit object.
Figure 7 is a flow diagram illustrating an example implementation of process-not-direct-connection function.
Figure 10 is a block diagram illustrating the components of an entertainment center.
Figure 11 illustrates a block diagram illustrating various components of the AV system.
Figure 12 is a flow diagram illustrating the assigning of a program to an entertainment center.
Figure 13 is a flow diagram of function to select a program.
Figure 14 is a flow diagram representing an example implementation of a set current program function of an entertainment center object.
Figure 15 is a flow diagram of an example implementation of a function to get a loaded player/recorder object.
Figure 16 is a flow diagram of example implementation of the load yourself function of the player/recorder object.
Figure 17 is a flow diagram of an example implementation of the load program function of a player/recorder object.
Figure 18 is a flow diagram of an example load program function of a media manager object
Figure 19 is a flow diagram of another example load program function of the media manager object.

Each output component (*e.g*., laserdisc player or output software component) has a source port associated with each type of the output signal that it can output. For example, an output component may output a video signal in RGB format through one source port and may output audio signal in AES format through another source port. Each input component (*e.g.,* speaker system or input software component) has a sink port associated with each type of input signal that it can input. For example, an input component may input a signal in RGB format through one sink port. The AV system models each port with a corresponding port object. The AV system has a corresponding primitive source port object for each source port and a corresponding primitive sink port object for each sink port.

Each source port can be connected to one or more input ports. For example, a source port that outputs a video signal-can be connected to the input ports of several monitor devices. The path between a source port and a sink port can be static or dynamic. A static path may correspond to a direct connection between a source port and a sink port of the output component. A dynamic path can be established through a switching mechanism. A switching mechanism allows for its sink ports to be connected to its source ports so that a path can be established. The connection can be a virtual circuit or a transport medium. For example, a certain bandwidth of the transport medium may be allocated for the connection. The path between a source port and a sink port is referred to as a primitive circuit. A primitive circuit may be a direct path between a source port of an output component and a sink port of an input component A primitive circuit may also be a path between a source port of an output component with an input switching port (a type of sink port) of a switching mechanism. Similarly, a primitive circuit may be a path between an output switching port (a type of source port) of a switching mechanism to a sink port of an input component. The AV system has a corresponding primitive circuit object for each path with a signal origination from a source port and/or terminating at a sink port, corresponding input switching port object for each input switching port, and an output switching port object for each output port.

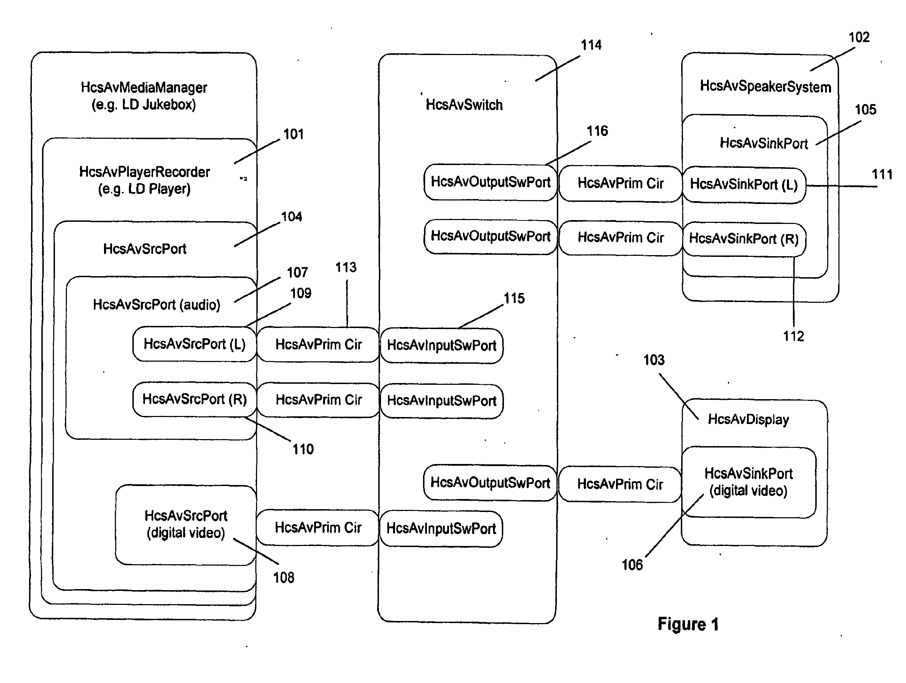

Figure 1 is a block diagram illustrating network layer objects that model the path between output components, switching mechanisms, and input components. In this example, a laserdisc player is connected to a speaker system and a display. The laserdisc player includes three physical source ports: one for digital video, one for left audio, and one for right audio. The source ports have a direct path to input switching ports of the switching mechanism. The speaker system has two sink ports: one for left audio and one right audio. The display has a sink port for digital video. The sink ports of the output devices have direct paths to the output switching ports of the switching mechanism. The AV system represents each of these components with a corresponding object in memory. The player recorder object 101 corresponds to the laserdisc player. The speaker system object 102 corresponds to the speaker system, and the display object 103 corresponds to the display. The AV system represents multiple ports of a component by a single aggregating port object. The source port object 104 corresponds to the source ports of the laserdisc player, the sink port object 105 corresponds to be sink ports of the speaker system, and the sink port object 106 corresponds to the sink port of the display. Each port object may contain nested port objects to organize the ports of a component in a hierarchy. In this example, the source ports of the laserdisc player are represented by an aggregate source port object 104 that contains two child source port objects. A one child source port object 107 represents the audio source ports, and the other child source port object 108 represents the video source port. The source port object representing the audio source port contains two source port objects. One source object 109 represents the left audio source port, and the other source port object 110 represents at the right audio source port. Similarly, the sink port object 105 represents the sink ports of the speaker system and contains two child sink ports. One sink port objects 111 represents the left audio sink port, and the other child sink port object 112 represents the right audio sink port. Since the display has only one sink port, its corresponding sink port object 106 has no child sink ports. A source port object or a sink port object that has no child port is referred to as a primitive port object. For example, source port objects 109 and 110 are primitive source ports. A port object that is not a child of any other port object is referred to as a complete port object. For example, source port object 104 is a complete source port object. Sink port object 106 is both a primitive sink port object and a complete sink port object.

The AV system may represent each path by a primitive circuit object. In this example, primitive circuit object 113 corresponds a direct path between the left audio source port of the laserdisc player and an input switch port of the switching mechanism. The AV system represents the switching mechanism by a switch object 114. A switch object contains an input source port object 115 for each of its input switch ports and an output switch port object 116 for each of its output switch ports.

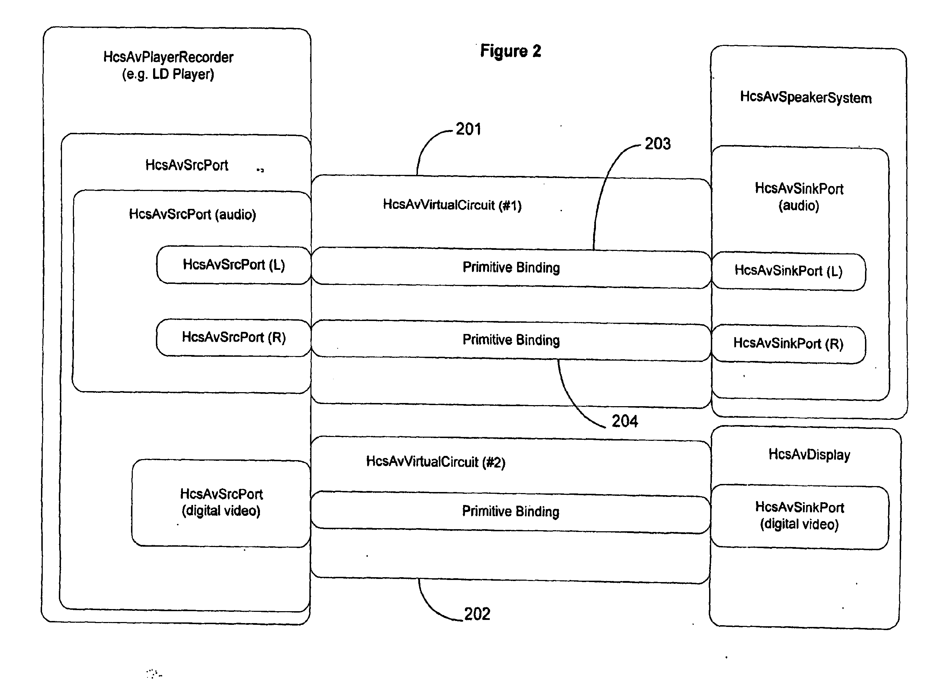

The AV system represents a path for a signal between a complete source port and a complete sink port by a virtual circuit. A signal models actual informational context that is on a path. A virtual circuit may represent static and dynamic connections. Figure 2 is a block diagram illustrating the session layer objects that represent virtual circuits. The AV system represents a virtual circuit by a virtual circuit object. The virtual circuit object 201 corresponds to the path between the complete source port of the laserdisc player and the complete sink port of the speaker system. The virtual circuit object 202 corresponds to the path between the source port of the laserdisc player and the complete sink port of the display. The virtual circuit object 201 corresponds only to the audio source ports of the laserdisc player, and the virtual circuit object 202 corresponds only to the video source ports of the laserdisc player. Each virtual circuit object contains a primitive binding information corresponding to each of the path within that virtual circuit. For example, the virtual circuit object 201 contains a primitive binding information 203 and 204. The AV system allows each source port to be connected to multiple sink ports.

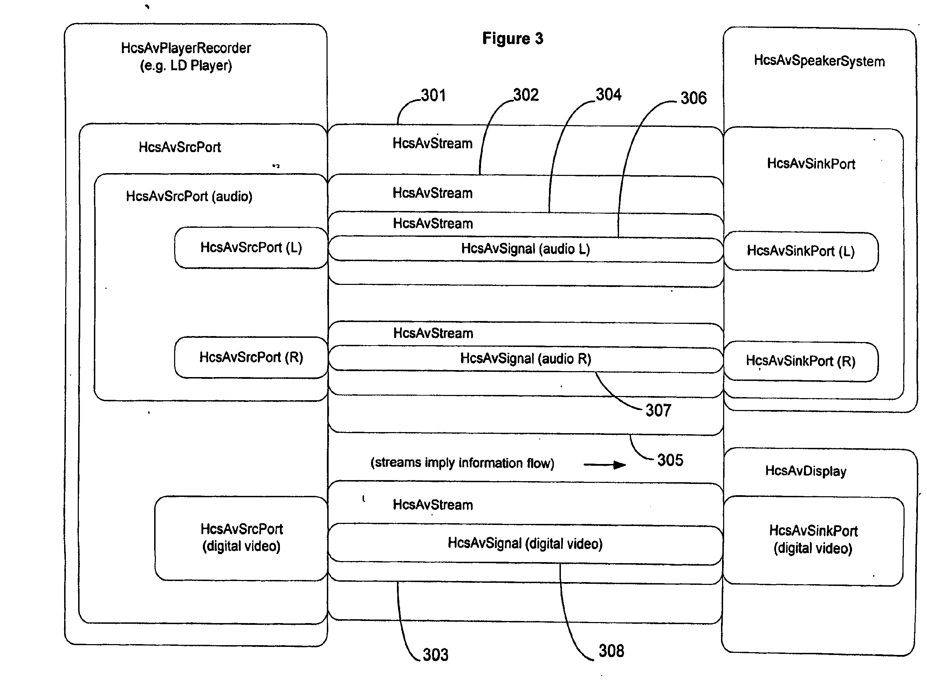

Figure 3 is a block diagram illustrating management lazer objects. The AV system represents the signals that are output by the source ports of an output component as a stream. That is, each output outputs a stream of signals. The signals within the stream are hierarchically organized in a manner that is similar to how source ports are organized within a complete source port. The AV system represents the stream of an output component by a stream object that may contain other stream object. In this example, the output signals of the laserdisc player are represented by stream object 301. The audio signals of the laserdisc player are represented by child stream object 302, and the video signal of the laserdisc player is represented by child stream object 303. The audio stream object contains a child stream object 304 representing the left audio signal and a child stream object 305 representing the right audio signal. A stream object that does not contain other stream objects is referred to as a primitive stream object. A stream object that is not contained in within other stream objects is referred to as a complete stream object. For example, stream object 301 is a complete stream object, and stream object 304 is a primitive stream object. Each primitive stream object contains a signal object that corresponds to the signal that is output by the corresponding source port. Signal object 306 corresponds to the signal that is transmitted between the left audio source port of the laserdisc player and the left sink port of the speaker system. Signal object 307 corresponds to the signal that is transmitted between the right audio source of the laserdisc player and the right sink port of the speaker system. Signal object 308 corresponds to the signal that is transmitted from the video source port of the laserdisc player to the sink port of the display.

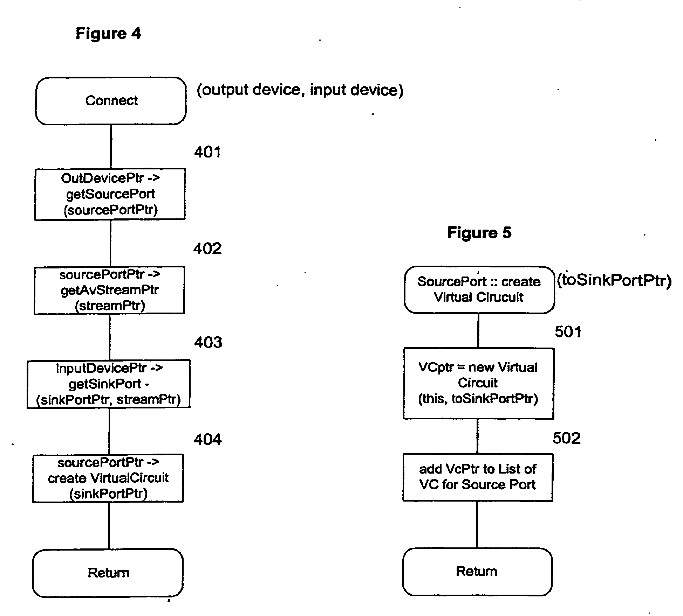

Figure 4 is a diagram illustrating the establishment of a path between an output component and an input component. A path is established using an object that represents the output component and an object that represents the input component. In step 401, the process requests the output object to provide a pointer to a complete source port object. In step 402, the process requests the source port object for a pointer to its complete stream object. In step 403, the process requests the input object to provide a pointer to its complete sink port object. In step 404, the process asks the source port object to create a virtual circuit object that establishes a path between the source port to the sink port. The process is then complete.

Figure 5 is a flow diagram representing a function of a complete source port object for creating a virtual circuit object. This function performs the processing necessary to establish a path for a signal between a primitive source port and a primitive sink port. The create virtual circuit function is passed a pointer to the sink port object. In step 501, the function creates a new virtual circuit object passing a pointer to the source port object and a pointer to the sink port object. In step 502, the function adds the virtual circuit object to a list of virtual circuits for the source port object. The function then returns.

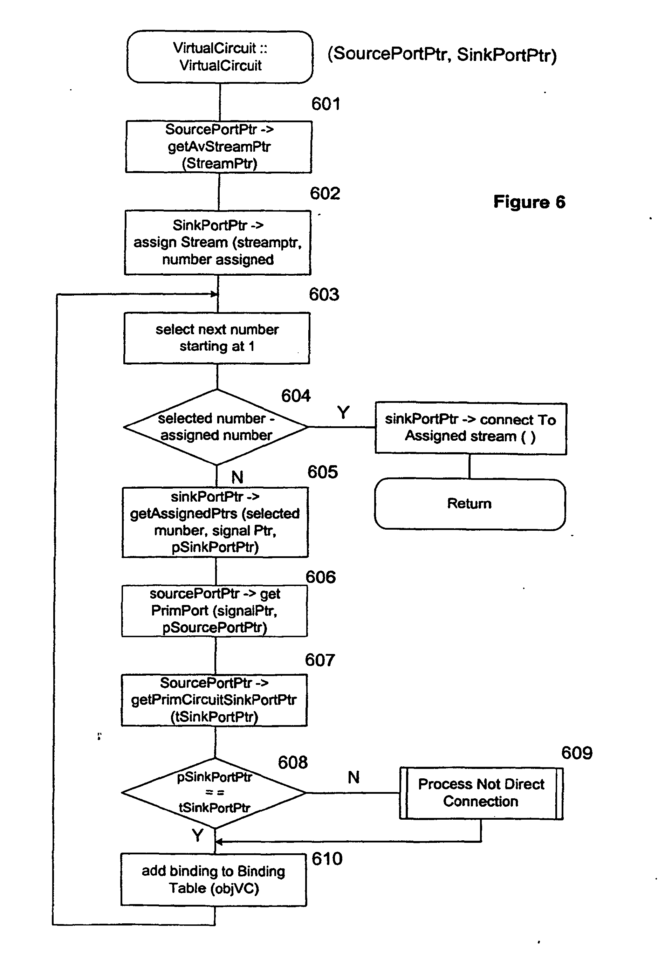

Figure 6 is a flow diagram of example implementation of the constructor for a virtual circuit object. The constructor is passed a pointer to a source port object and a pointer to a sink port object. In the step 601, the constructor retrieves a pointer to the stream associated with the source port object. In step 602, the constructor assigns the stream to the sink port object by invoking the assign stream function of the sink port object passing a pointer to the stream object. The assign stream function returns the number of signal objects within the stream object that are assigned to the complete sink port object. In steps 603-610, the constructor loops creating a primitive binding object for each signal object that is assigned to the sink port object. In step 603, the constructor selects the next signal number starting with 1. In step 604, if the selected number is greater than the number of assigned signals, then the constructor returns, else the constructor continues at step 605. In step 605, the constructor retrieves a pointer to the primitive sink port object corresponding to the numbered signal object and retrieves a pointer to the signal object itself. The constructor retrieves these pointers by invoking the get assignment pointer function of the sink port object. In step 606, the constructor retrieves a pointer to the primitive source port object for the corresponding signal port object. In step 607, the constructor retrieves a pointer to the sink port object of the primitive source port object. In step 608, if the primitive sink port object of the primitive circuit of the primitive sink port object is the same as the primitive sink port object of the primitive circuit of the primitive source port object, then a direct connection exists between the source port and the sink port. Otherwise, the connection is through a switching mechanism. If the connection is through a switching mechanism, then the constructor continues at step 609, else the constructor continues at step 610. In step 609, the constructor invokes a process-not-direct-connection function. In step 610, the constructor adds an identification of the binding from the primitive source port to the primitive sink port to the binding table of the virtual circuit object. A binding represents the identity of the primitive source port object and the primitive sink port object. If the connection is not direct, the binding also includes the identity of the input switch port object and the output switch port object of the switching mechanism. The function then loops to step 603 to process the next signal object.

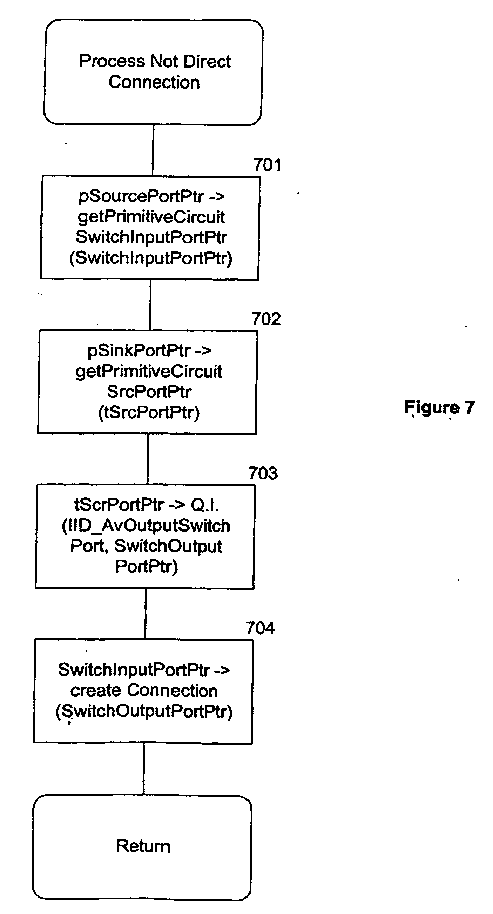

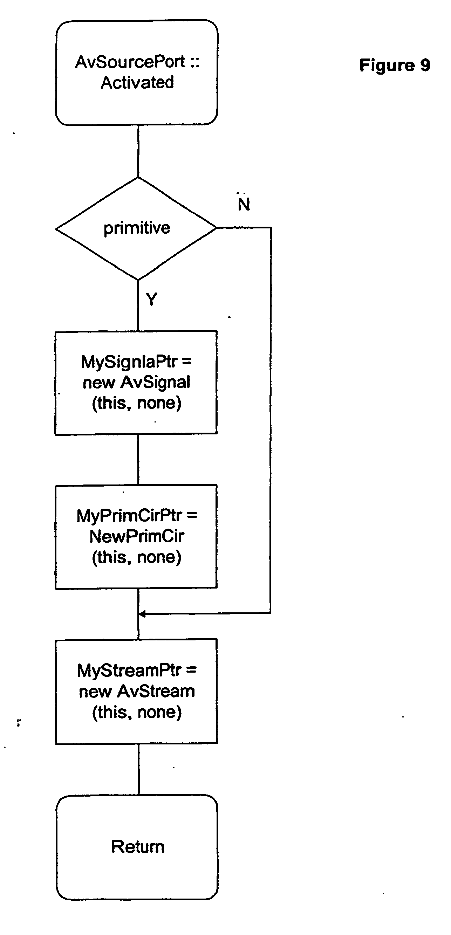

Figure 7 is a flow diagram illustrating an example implementation of process-not-direct-connection function. In step 701, the function retrieves a pointer to switch input port object for the primitive circuit of the primitive source port object. In step 702, the function retrieves a pointer to the primitive source port object. In step 703, the function retrieves a pointer to the output switch port object of the retrieved primitive circuit. In step 704, the function creates a connection between the input switch port object and the output switch port object. The function then returns.

```
     class AvPort
     {
           getOwnerObjectPtr (resultPtr);
           isCompletePort();
           isPfimitivePort();
           getParentPortPtr(portPtr);
           getNumberOfChildPorts(number);
           getChildPortPtr(number, portPtr);
           setProperty(resetIn);
           setProperty(resetOut);
     }

     getOwnerObjectPtr (resultPtr);
```

This function returns a pointer to the owner object of the port. The owner of the port is the object that directly contains a complete port. Each port within the port hierarchy as the same owner object.
isCompletePort();

This function returns in indication as to whether this port is a complete port.
isPrimitivePort();

This function returns in indication as to whether this port is a primitive port.
getParentPortPtr(portPtr);

This function returns a pointer to the parent port of this port. The parent port is that port which is the next higher port in the port hierarchy.
getNwnberOfChildPorts(number);

This function returns the number of child ports of this port.
getChildPortPtr(number, portPtr);

This function returns a pointer to the child port designated by the passed port.

```
     class AvSinkPort : AvPort
     {
           isConnectedToStream();
           getAvStreamPtr(streamPtr);
           assignStream(streamPtr, number);
           unassignStream();
           getNumberOfAssignments(number);
           getAssignmentsPtrs(number, assignedSignalPtr, toPrimitivePortPtr)
           connectToAssignedStream();
     }

     isConnectedToStream();
```

This function returns an indication whether this sink port is connected to a stream.
getAvStreamPtr(streamPtr);

This function returns a pointer to the stream to which this sink port is connected.
assignStream(streamPtr);

This function is informs a sink port that it is to consider the signals within a stream for the purpose of assigning them to a primitive sink port.
unassignStream();

This function undoes the assigning.
getNumberOfAssignments(number);

This function returns the number of assignments between a signal and a primitive sink port that was made during the assignment.
getAssignmentsPtrs(number, assignedSignalPtr, toPrimitivePortPtr);

This function is passed an assignment number and returns an indication of the signal that is assigned to the primitive port.
connectToAssignedStream();

This function is used to inform a complete sink port and its container of the assigned stream so that any action appropriate to the connection can be taken, such as powering on the output component.

```
    class AvSignal
    {
           getSignalUsage(usage);
           getSignalFormat(fonnat);
           getParentStreamPtr(streamPtr);
           getSourcePortPtr(sourcePortPtr);
    }

    getSignalUsage(usage);
```

This function returns the usage of the signal. The usage may be, for example, left audio or the red of an RGBsignal.
getSignalFormat(format);

This function returns the format of the signal. The format may be, for example, 601 video or AES audio.
getParentStreamPtr(streamPtr);

This function returns a pointer to the stream which is the parent of this signal. That is, the primitive stream that is carrying the signal.
getSourcePortPtr(sourcePortPtr);

This function returns a pointer to the primitive source port that is outputting this signal.

```
    class AvStream
    {
           IsCompleteStream();
           IsPrimitiveStream();
           getParentStreamPtr(streamPtr);
           getNumberOflrhildStreams(number);
           getChildStreamPtr(number, streamPtr);
           getSourcePortPtr(sourcePortPtr);
           getSourceProgramPtr(sourceProgramPtr);
           getSignalPtr(signalPtr);
    }

    IsCompleteStream();
```

This function returns an indication as to whether this stream is a complete stream.
IsPrimitiveStream();

This function returns in indication as to whether this stream is a primitive stream.
getParentStreamPtr(streamPtr);

This function returns a pointer to the stream that is the parent of this stream.
getNumberOfChildStreams(number);

This function returns the number of child streams of this stream.
getChildStreamPtr(number, streamPtr);

This function returns a pointer to the numbered child stream of this stream.
getSourcePortPtr(sourcePortPtr);

This function returns a pointer to the source port that is producing this stream. The source port is at the same level in its hierarchy as this stream is in its hierarchy.
getSourceProgramPtr(sourceProgramPtr);

This function returns a pointer to the source program that is producing this stream.
getSignalPtr(signalPtr);

This function returns a pointer to the signal in this stream is a primitive stream.

```
     class AvPrimitiveCircuit
     {
           getSourcePortPtr(sourcePortPtr);
           getSinkPortPtr(sinkPortPtr);
     }

     getSourcePortPtr(sourcePortPtr);
```

This function returns a pointer to the primitive source port of this primitive circuit.
getSinkPortPtr(sinkPortPtr);

This function returns a pointer to the primitive sink port of this primitive circuit.

```
     class AvInputSwitchPort : AvSinkPort
     {
           getNumberOfConnections(number);
           getConnectionPtr(number, outputSwitchPortPtr);
           createConnection(outputSwitchPortPtr);
           removeConnection(outputSwitchPortPtr);
     }

     getNumberOfConnections(number);
```

This function returns the number connections from this input switch port to output switch ports.
getConnectionPtr(number, outputSwitchPortPtr);

This function returns a pointer to the numbered output switch port that is connected to this input switch port.
createConnection(outputSwitchPortPtr);

This function creates a connection from this input switch port to the passed output switch port.
removeConnection(outputSwitchPortPtr);

This function removes a connection from this input switch port to the passed output switch port.

```
    class AvOutputSwitchPort : AvSourcePort
     {
           getInputConnectionPtr(inputSwitchPortPtr);
     }

     getInputConnectionPtr(inputSwitchPortPtr);
```

This function gets the input switch port to which this output switch port is connected.

```
     class AvVirtualCircuit
     {
           getCompleteSourcePort(sourcePortPtr);
           getCompleteSinkPort(sinkPortPtr);
           getNumberOfPrimitiveBindings(number);
           getPrimitiveBindingPtrs(number, sourcePortPtr, sinkPortPtr);
     }

     getCompleteSourcePort(sourcePortPtr);
```

This function returns a pointer to the complete source port that is producing the signals being routed by this virtual circuit.
getCompleteSinkPort(sinkPortPtr);

This function returns a pointer to the complete source port that is receiving the signals being routed by this virtual circuit.
getNumberOfPrimitiveBindings(number);

This function returns the number of bindings between primitive source ports and primitive sink ports this virtual connection.
getPrimitiveBindingPtrs(number, sourcePortPtr, sinkPortPtr);

This function returns the numbered binding as a pointer to the primitive source port and a pointer to the primitive sink port.

```
    AvSourcePort
    class AvSourcePort : AvPort
    {
          isActiveSourcePort();
          getAvStreamPtr(streamPtr);
          getPrimitiveCircuitPtr(primitiveCircuitPtr);
          getNumberOtVirtuaICircuits(number);
          getViriualCircuitPtr(number, virtualCircuitPtr);
          createVirtualCircuit(toSinkPortPtr);
          removeVirtualCircuit(toSinkPortPtr);
    }

    isActiveSourcePort();
```

This function returns in indication of whether this source is active. A source port is active when it is capable producing a signal.
getAvStreamPtr(streamPtr);

This function returns a pointer to the stream associated with this source port.
getPrimitiveCircuitPtr(primitiveCircuitPtr);

This function returns a pointer to the primitive circuit associated with this source port if this primitive source port.
getNumberOfVirtualCircuits(number);

This function returns the number of virtual circuits that are associated with this source port.
getVirtualCircuitPtr(number, virtualCircuitPtr);

This function returns a pointer to the numbered virtual circuit.
createVirtualCircuit(toSinkPortPtr);

This function creates a virtual circuit that connects this source port to the passed sink port.
remove VirtualCircuit(toSinkPortPtr);

This function removes the virtual circuit that connects the source port to the passed sink port.

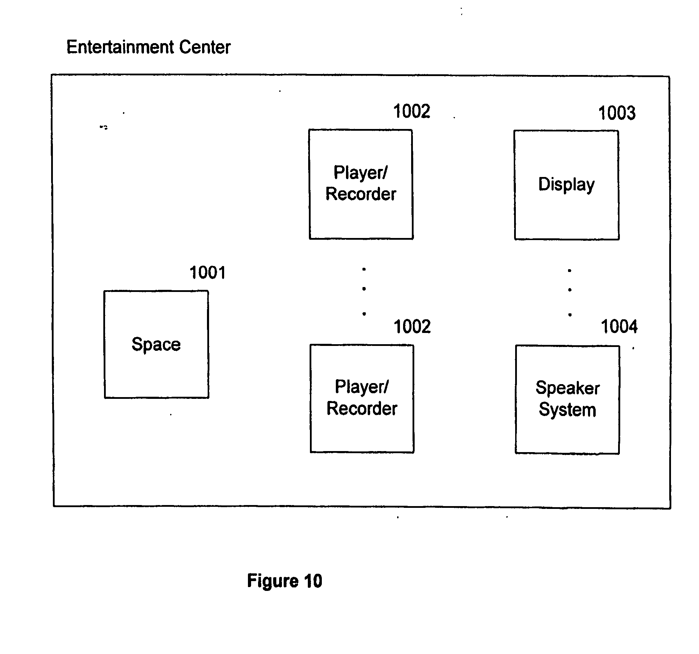

Figure 10 is a block diagram illustrating the components of an entertainment center. An entertainment center component provides a behavior that allows an AV program to be assigned to a player/recorder component. When a program is assigned to an entertainment center, the entertainment center performs the processing that is needed to load that program into a player/recorder, cause the program to be played, and route the output signals of the player/recorder component to output components. An entertainment center may be associated with a space (e.g., a room within a house). The entertainment center may also be associated with multiple player/recorders and multiple output components such as a display component and a speaker subsystem component. The AV system represents the associated space by a space object 1001, represents the player/recorder components by player/recorder objects 1002, and represents the output components by a display object 1003 and a speaker subsystem object 1004. An entertainment center may have a default set of the output components. When a program is assigned to the entertainment center, the output signals for the player/recorder component are routed to these default output components. The entertainment center controls the creating of virtual circuits that are needed to effect this routing. The entertainment center may also allow the output signals of a player/recorder component to be dynamically routed to different output components. For example, the entertainment center may allow the output of the player/recorder component to be dynamically routed to a speaker system component associated with another space. To effect this dynamic routing, the AV system creates and destroys virtual circuits dynamically. In one embodiment, the entertainment center may determine for each of its output components whether the routing should be allowed, whether to be notified when an output signal is routed due to an action external to the entertainment center, and whether to provide a user interface for controlling the output component to which the signal is routed. These determinations may be different for each outpout component associated with the entertainment center. When an entertainment center is notified that one of its output components has been routed to due to an external action (e.g. a different entertainment center routing to the output component causing the notification), the entertainment center can become an additional controller of the player/recorder. An entertainment center may also provide property notifications when the properties of its associated player/recorder components or output components change. For example, the entertainment center may notify a corresponding user interface component that the pause button on a player/recorder component has been depressed. An entertainment center object may provide a user interface component that is appropriate for controlling the user interface of the input components and output components associated with the entertainment center.

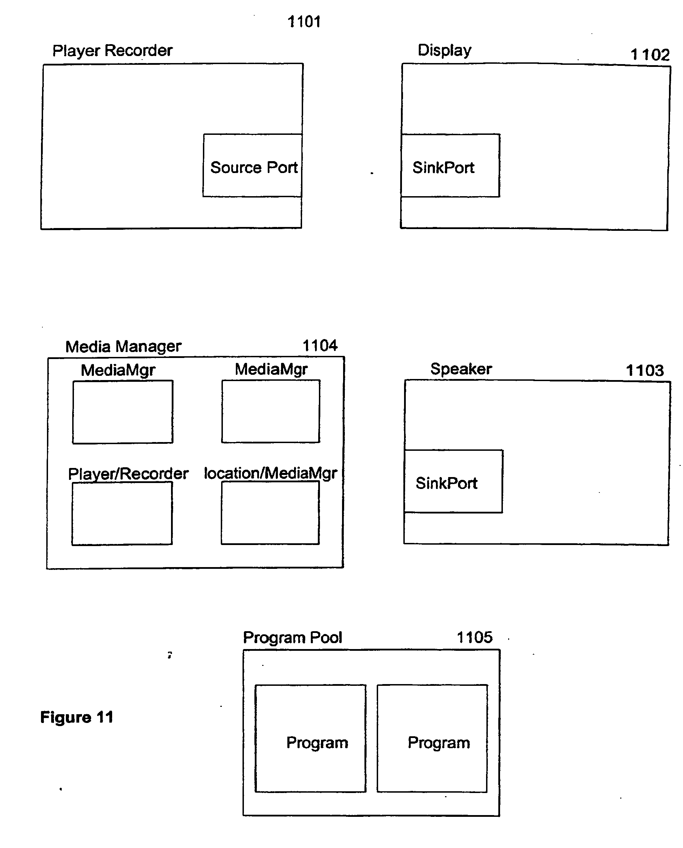

Figure 11 illustrates a block diagram illustrating various components of the AV system. The AV system includes player/recorder objects 1101, display objects 1102, speaker system objects 1103, media manager objects 1104, and program objects 1105. A player/recorder object has one or more complete source port objects associated with it and may have one or more complete sink port objects associated with it. Each output object has one or more complete sink ports associated with it. A player/recorder object typically corresponds to a physical player/recorder component, such as laserdisc player. The player/recorder object provides a behavior to load an AV program into the player/recorder component. A player/recorder object also provides a behavior that allows commands to be sent to the player/recorder component. For example, after a laserdisc has been loaded, a start, pause, or stop command can be sent via the player/recorder object to the player/recorder component. The player/recorder object also provides the behavior to determine whether a particular AV program can be loaded into the player/recorder component. A player/recorder object may also provide additional behavior that is customize to the characteristics of the corresponding player/recorder component.

The output objects that correspond to the output components provide a behavior that returns the identification of a sink port object that is appropriate for assigning the signals associated with a specified stream object. For example, a speaker system object that is passed a stream that includes both video and audio signals would return an indication that only audio sink ports are to be assigned. The output objects may also provide additional behavior that is specific to the type of output component. For example, a display object may provide behavior for turning the display on and off and for controlling the contrast of the display. A speaker system object may provide behavior for controlling the volume, equalizer functions, and surround sound system controls. This additional behavior may be part of the base object class or may be provided through a derivation of that base object class.

A program pool object represents a collection of AV programs. Each AV program as a corresponding program object. An AV program conceptually corresponds to a media that can be played by a player/recorder component. For example, an AV program may represent the feed provided through a certain television channel, a musical score stored on a CD, a movie stored on a laserdisc, and so on. These AV programs can be hierarchically organized to represent more complex AV programs. For example, and AV program may include a sub-AV program corresponding to the feed from a television channel and a sub-AV program corresponding to the output of a computer program. Thus, AV programs can represent arbitrarily complex multimedia programs. The AV system represents an AV program by a program object. A program object provides the behavior to browse through the hierarchy of the AV programs represented by that program object, allows a player/recorder component to be assigned to the AV program, and provides a behavior corresponding to the loading of the AV program into the player/recorder component. A program object also has a program ID, which provides descriptive information about the AV program. For example, descriptive information may include the name of the movie that the AV program represents. A program object stores the location of the media that corresponds to the AV program. For example, if the AV program corresponds to a laserdisc in a certain laserdisc stack, then the location would indicate the stack and slot of the laserdisc within the stack. In one embodiment, the location is represented as a path within a hierarchy of locations. A program object stores the identifier of an owner, which may be the program pool object that the program object is within. A program object allows for the retrieving of its child program objects and may allow for certain criteria to be established so that only children that match the criteria are returned. A program object may also allow for retrieving of its parent program object. In one embodiment, the parent program object may be retrieved through the containing program pool by providing the location of the program object to the program pool. A program object has a program type associated with it. The program type specifies a path through a hierarchy of program types. The hierarchy of program types is described below in detail.

In one embodiment, the AV system provides a capability for resolving a program ID into many different types of references. For example, the AV system may provide a get program object function that inputs a program ID and returns a reference to a corresponding program object. The AV system may also provide a get program genre function that inputs a program ID and returns a set of program objects in the same genre. For example, a program ID for a country music song when provided to the get program genre function would return references to program objects corresponding to other country music songs. To implement such multi-resolution references, the functions may access the program object associated with the program ID to retrieve information on its genre.

A program object may provide alternate interfaces for maintenance of state. For example, a program object may provide an interface for adding and deleting properties of the program object and setting properties of the program object. An alternate interface may also provide for the adding and deleting of child program objects or for the deleting of the program object itself. These interfaces may be specific to the type of AV program represented by the program object.

A program pool has a corresponding program pool object. A program pool object provides an access port for each client that is accessing the program pool. The program pool object provides a function that receives a program ID and returns a reference to a program object corresponding to that program ID. A program pool object also allows for database cursor-like access to the program objects. For example, a query can be submitted which specifies the criteria for program objects. The program objects that match that criteria are provided in a result set. The client can access that result set using techniques such as advance to the next program object, get reference for the current program object, and return a set of references for the program objects in the result set. In one embodiment, the result set of a query may be cached at a client to reduce communications between the client in the program pool. The program pool may also automatically update the client's cache as the set of programs that match the criteria changes. In one embodiment, the program pool provides an access control mechanism to restrict access by certain clients. The program pool may use the phantom object mechanism as described in "Method and System for Tracking Clients."

The media manager provides a mechanism for managing media at its location and for providing a player/recorder object for the media itself. For example, a media manager object may correspond to a multi-laserdisc stack. The media manager object provides a load program function that is passed a program object and that returns a player/recorder object with that program loaded. A media manager may be hierarchically organized. That is, a media manager object may have child media manager objects to an arbitrary level of nesting. Each parent media manager object may have an associated location table. The location table maps the location of a program to the media manager object that is responsible for returning the player/recorder object for that program object. A media manager object that has no child object may process the location of the program object to identify which player/recorder to associate with the program object. For example, if a media manager object represents a multi-laserdisc stack, then the media manager object may use the location associated with that program object to determine which slot within the stack contains the media for that program.

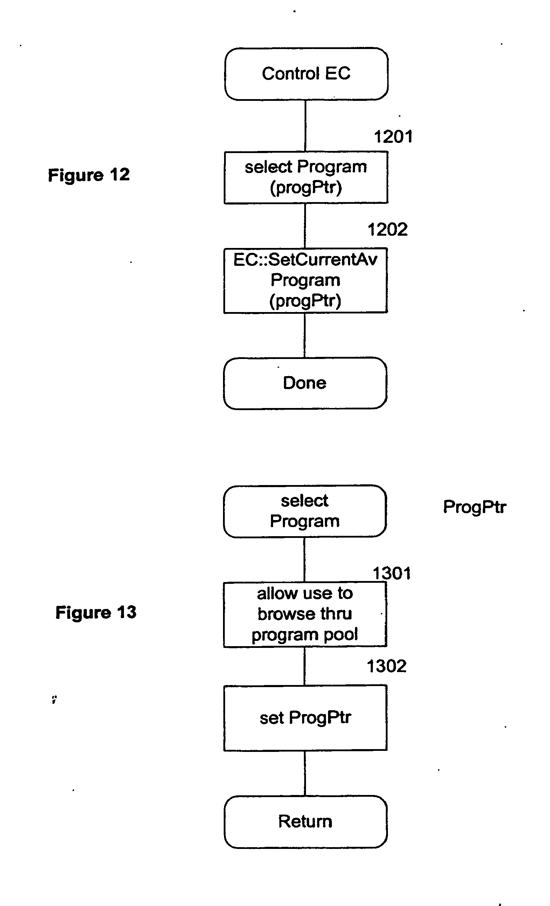

Figure 12 is a flow diagram illustrating the assigning of a program to entertainment center. In step 1201, the function invokes a function to select a certain program object. The invoked function returns a pointer to the program object. In step 1202, the function invokes the set current program function of the entertainment center object passing the pointer to the program object. The processing is then complete.

Figure 13 is a flow diagram of function to select a program. This function may display a user interface that allows a user to browse through the programs in a program pool. The user interface may allow the user to specify various search criteria. For example, the user interface may allow the user to specify the type of music that is of interest. In step 1301, the function allows the user to select a program from the program pool. In step 1302, the function sets the return pointer to a pointer to a program object representing the program. The function then returns.

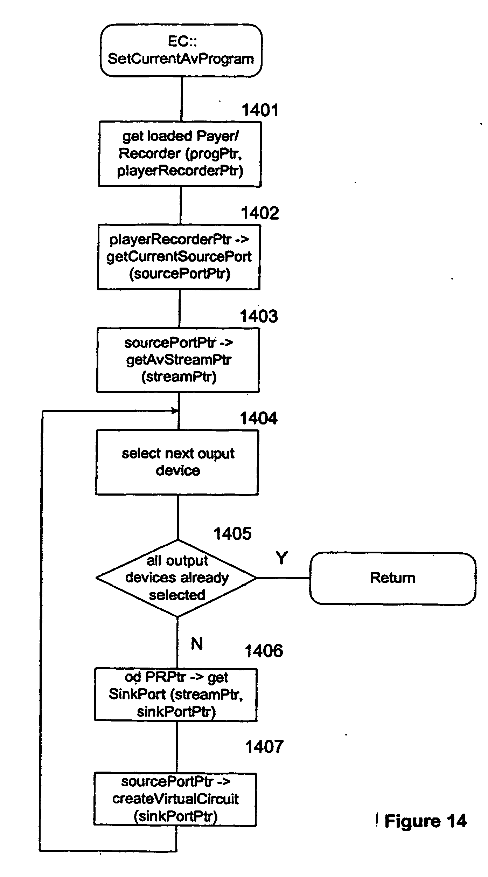

Figure 14 is a flow diagram representing an example implementation of a set current program function of an entertainment center object. This function is passed a pointer to a program object and effects the loading of that program within the entertainment center. In step 1401, the function invokes a function to retrieve a loaded player/recorder object. The function passes a pointer to the program object and is returned a pointer to a player/recorder object that is loaded with the program. In step 1402, the function invokes the get current source function of the player/recorder object. That invoked function returns a pointer to the complete source port for the player/recorder object. In step 1403, the function invokes the get stream pointer function of the source port object to retrieve a pointer to the complete stream for that source port object. In steps 1404-1407, the function loops selecting the output components associated with the entertainment center and creating a virtual circuit from the player/recorder component to the output components. As described above, a entertainment center may have a default set of output components. In step 1404, the function selects the next output component. In step 1405, if all the output components have already been selected, then the function returns, else the function continues at step 1406. In step 1406, the function requests the selected output component to return a sink port object that is appropriate to the stream. The function invokes a get sink port function of the output object corresponding to the selected output component. In step 1407, the function invokes the create virtual circuit function of the source port object passing a pointer to the sink port object. That invoked function creates a virtual circuit from the source port to the sink port. The function then loops to step 1404 to select the next output component.

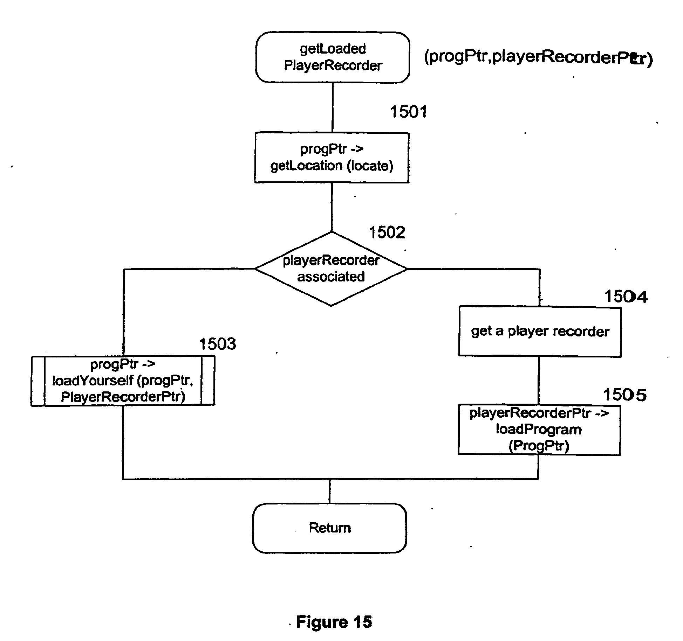

Figure 15 is a flow diagram of an example implementation of a function to get a loaded player/recorder object. This function is passed a pointer to a program object and returns a pointer to a player/recorder object. In step 1501, the function retrieves the location of the program object. In step 1502, if the location indicates that a player/recorder component is already associated with this program object, then the function continues at step 1503, else the function continues at step 1504. In step 1503, the function invokes the load yourself function of the program object and receives a pointer to a loaded player/recorder object in return. In step 1504, the function gets a player/recorder object that is appropriate to the entertainment center. In step 1505, the function invokes a load program function of the player/recorder object passing the pointer to the program object. The function then returns.

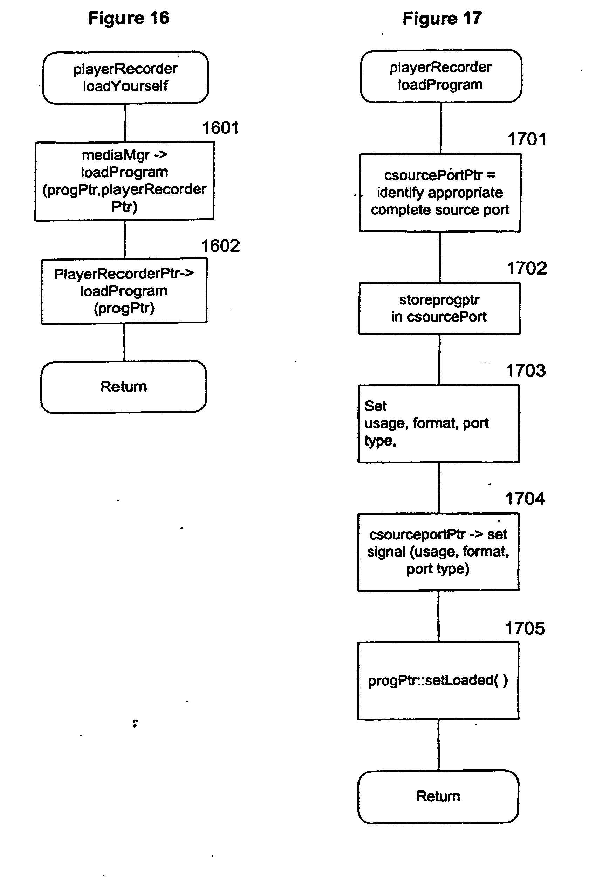

Figure 16 is a flow diagram of example implementation of the load yourself function of the player/recorder object. This function is passed a pointer to a program object that is to be loaded into the player/recorder component. In step 1601, the function invokes a load program function of the media manager object passing a pointer to the program object and receiving a pointer to a player/recorder in return. In step 1602, the function invokes the load program function of the player/recorder object passing the program pointer and then returns.

Figure 17 is a flow diagram of an example implementation of the load program function of a player/recorder object. This function is passed a pointer to a program object and effects the loading of the program into that player/recorder component. In step 1701, the function identifies a complete source port that is appropriate for the passed program. A player/recorder component may have more than one complete source port. For example, a player/recorder object may have a complete source for corresponding to an RGB signal and another complete source port corresponding to a digital video signal. In step 1702, the function assigns the program object to the player/recorder object. In step 1703, the function determines the usage, format, and port type for the primitive ports of the selected source port. In step 1704, the function invokes the set signal function of the complete source port passing the usage, format, and port type. The invoked function sets the usage, format, and port type for each primitive source port. In step 1705, the function notifies the program object that it has now been loaded. The function then returns.

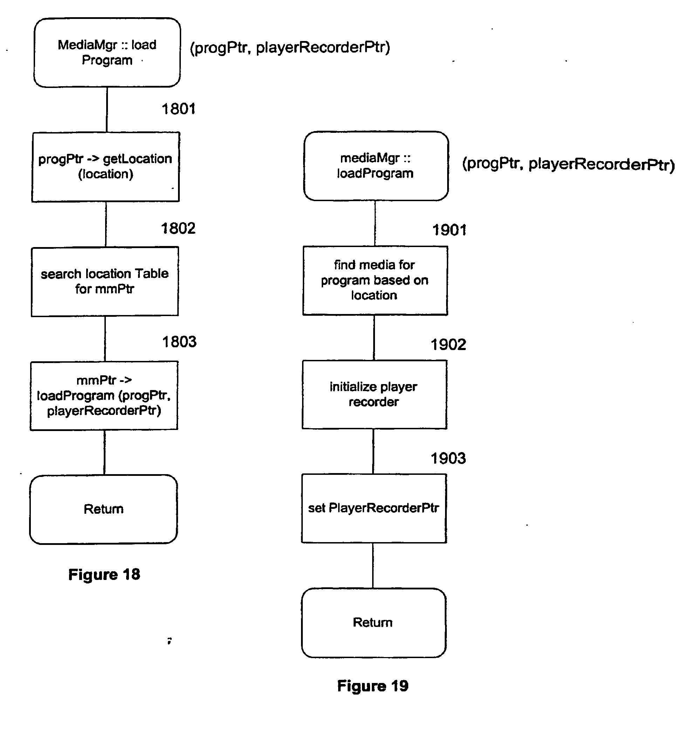

Figure 18 is a flow diagram of an example load program function of a media manager object. This example function describes the processing that may be performed when the media manager has child media manager objects. This function is passed a pointer to a program object and returns a pointer to a player/recorder object. In step 1802, the function invokes the get location function of the program object to retrieve the location of the media as indicated by the program object. In step 1802, the function searches the location table for a media manager object that manages the media corresponding to the program object. In step 1803, the function invokes the load program function of the located media manager object and then returns.

Figure 19 is a flow diagram of an another example load program function of the media manager object. This example function describes the processing that may be performed when the media manager object has no child media manager object. In step 1901, the function retrieves the location from the program object and finds the media associated with that location. In step 1902, the function initializes a player/recorder object for that media. In step 1903, the function sets a return pointer to point to player/recorder object. The function then returns.

```
 class Program
 {
    getProgramId(Id);
    getProgramType(type);
    getProgramLocation(location);
    getDescPropteryValueByName(name, value);
    getOwnerObjectPtr(ownerPtr);
    getPlayerRecorderPtr(prPtr);
    loadYourself();
    unloadYourself();
    getParent(parentPtr);
    getChild(childPtr);
 }

 class ProgramPool
 {
    getPort(progPoolPortPtr);
 }

 class ProgPoolPort
 {
      getReference(id, progPtr);
      getCursor(progPoolCursorPtr);
 }

 class ProgramPoolCursor
 {
      getMatchingSetOfReferences(set);
      submitQuery(query);
      advance();
      getReference(progPtr);
      clone(ProgPoolPtr);
 }

 class PlayerRecorder
 {
      canLoadProgram(progPtr);
      loadProgram(progPtr);
      sendControlCommand(command);
 }

 class EntertainmentCenter
 {
      setCurrentActiveSourceProgram(progPtr);
 }
```

One skilled in the are would appreciate that various modifications can me made to the present invention. Accordingly, the invention is not limited to the specific embodiments, but instead the scope of an invention is specified by the following claims.

### Appendix I

### Overview

The House Control System (HCS) is composed of several subsystems, such as HVAC, Lighting, HVAC, and Audio/Video. Each subsystem is responsible for managing its own resources and providing services to the end users of the HCS system.

The various HCS AV subsystem components provides the user complete and uniform access to the various AV resources available to HCS.

### The Physical Environment

Before we dive into the details, let's take a look at the physical AV environment that HCS exists within, manage, and represent to the user.

In general, the physical AV system should be viewed as a set of "networked" devices that can be dynamically interconnected and programatically controlled.

### The "AV Network"

The AV Network consists of one or more AV analog matrix switches through which the various AV devices' inputs and outputs are connected. These switches, taken together, are used to form temporary connections between these devices for the purpose of routing AV signals between them.

The AV Network could be extended to include the digital routing of AV information via high speed networks like ATM. This fact needs to be taken into account from an architectural point of view.

### The AV Devices

There are several kinds of AV devices envisioned. These include:
- Various kinds of Audio Speaker systems (ambient, stereo, theater...) - these include amplifiers.
- Various types of Video Displays,
- Remote control devices (Port-a-mice),
- Standalone recorders and players (e.g. VCR, CD...),
- Shared RF (TV & Radio) broadcast tuners.
- Other internal AV sources (such as security cameras),
- Cable "tuners" for audio and A/V broadcast (DMX. TCI...), and
- Shared pools of AV Programming:
   - Audio CD Jukeboxes,
   - LaserDisc (AV) Jukeboxes,
   - VHS Tape Jukeboxes, and
   - Still frame image libraries.

The goal of the HCS AV design is to abstract the behavior of these resources to a point that they, as well as new types of devices (hardware and software), can be dealt with in a uniform, natural fashion by the end user.

### The HCS User's view

It is not appropriate for the HCS user to interact at the physical level of the AV subsystem. The goal then is to provide natural, high level, abstractions through which the user interacts. In order to accomplish this, there are several other intermediate abstractions between the physical entities (devices) and the user that will have to be defined and implemented. In order to organize our thinking as well as the design itself, a layered functionality model is used.

### The HCS AV Functionality Model

The following model is used to classify the different levels of functionality within the HCS AV subsystem.

| Layer | Purpose |
|---|---|
| Service | Provides end-user access and control over the entire AV subsystem. Provides natural and unified perspective of the AV resources. Components at this layer tend to be UI oriented. |
| Management | Provides for the management of specific kinds of resources (physical or not). The intent is to limit specific knowledge of AV resources, routing, etc. to this or lower layers. Further, the intent is that the Service layer components "use" the management layer to accumulate and carry out user requests (more about this later). It is very possible that this layer will deal directly with the user via UI component objects that are presented within Service UIs. |
| Network | The components of this layer are responsible for managing and representing the temporal connections between AV components involved in the execution of a user request. This layer also includes thel components implement the actual AV "switching fabric". The entire fabric, no matter how complicated, is "glued" together and presented as a single, sparse. 2-D (inputs vs. outputs) switch matrix. In addition, this layer models the AV inter-connection map of the entire AV system (circuits, ports...). |

Each of the various AV objects, that make up the AV software implementation, each map there behavior to one of these levels. Once all of these component objects classes are introduced, each level of this reference will be restated identifying which components implement that level of functionality.

### Review: The HCS Spatial Model

The basic unifying, the "concrete" if you will, object class in the HCS design is the *HcsSpace.* HcsSpaces represent the actual (physical) spatial entities (areas, rooms, wings, floors, buildings, ...) and their relationship to each other. This spatial model provides the "grounding" for other objects within the HCS system design. Before going into the details of the AV object model, a bit of review may be helpful.

There is a object class called an *HcsSpatialService.* HcsSpatialServices are aggregated within HcsSpace instances. Their purpose is to extend the overall behavior of a specific HcsSpace beyond that of just being a space. As an example, if a given space is to allow the control of lights, then the lighting oriented HcsSpatialService would exist in that space. The same would be true for spatial AV behavior.

To complete this space-centric behavior description of HCS, we consider how UIs are implemented within this context. First of all, all physical points of HCS/User interaction are modeled as an *HcsUserControlPoint* object and are associated with exactly one HcsSpace at any given time. There may be multiple HcsUserControlPoints associated with a single HcsSpace however. The intent is that this relationship model the physical relationship between these entities.

For every different kind of HcsUserControlPoint there will be a specific derivation implemented. The intent is that a derivation knows exactly what it "is" and how to act that way. To make this point clear: a "TV" kind of HcsUserControlPoint acts like a TV that allows HCS control to occur within that context. While a touch panel HcsUserControlPoint would allow much more direct HCS access because its basic purpose in life is to provide for general HCS system usage.

Another important fact about HcsUserControlPoints is that they are basically, beyond their normal behavior (like being a TV), just UI-frameworks for the HcsSpatialService instances that exist in that HcsSpace and to which the subject HcsUserControlPoints belong.

So far the only real UI type of component introduced has been the HcsUserControlPoint. Again from an UI perspective, this is really just a framework for other subordinate UIs. Other objects (Resources) in the system such as HcsSpatialServices and shared AV devices in the ECs, need to be able to present their UIs ultimately within the framework of specific kinds of HcsUserControlPoints (TV, PC. TouchPanels...). This is not done directly but rather through surrogate objects called an
*HcsResUserCntls* (RUC) that co-reside in the same process space as the HcsUserControlPoint through which the resource's UI will be presented. One way to think about Resources that have a UI is as a set of objects. The first being the actual resource itself, and the others being the various types of *HcsResUserCntls* (UI component) for the different types of HcsUserControlPoints through which that Resource can be used.

With this as a backdrop: the AV HcsSpatialService is called HcsEntertainmentCenter. It is in fact a derivation of the HcsSpatialService object class; and as such, directly extends the behavior of the HcsSpaces into which it is configured. There may be zero or more instances of an HcsEntertainmentCenter present within a given HcsSpace. The rest of this document, as well as the bulk of the AV design and implementation, deals with abstracting the physical AV devices and interconnects to a point that they can be represented through an HcsEntertainmentCenter to the end user.

### Representing Spatial AV Devices

In addition to pools of shared AV hardware resources, there can also be normal (standalone) devices present in a space. All standalone devices (e.g. displays and media players/recorders) that are physically present in a space, are grouped together into a collection (HcsCollection) called an *HcsAvCollection.* HcsAvCollections are aggregated within their "owning" HcsSpace instance. Given this relationship, an HcsSpace can indirectly identify all of its local AV components to other HCS components. NOTE: shared devices such as JukeBoxes are NOT in this category - they are not considered to be local devices within any space.

### Definitions

This section of the document provides a description of the HCS AV object model through the definition of each object class within that model. Some of these object classes represent very low level kinds of things like wires and such, while others represent abstract things like information. An important point is that none of object classes defined here are just intended to model their real world (physical) counterparts but also "soft world" counterparts as well.

The best way to absorb the overall object model is to read the set of definitions at least twice. This is necessary because of the cross references between various definitions.

### Audio/Video Signal

The *A VSignal* object class represents all actual real time audio/video information that is sourced, routed, and sinked within an HCS AV network. This object class is intended to not only model analog signals but "digital signals" as well. 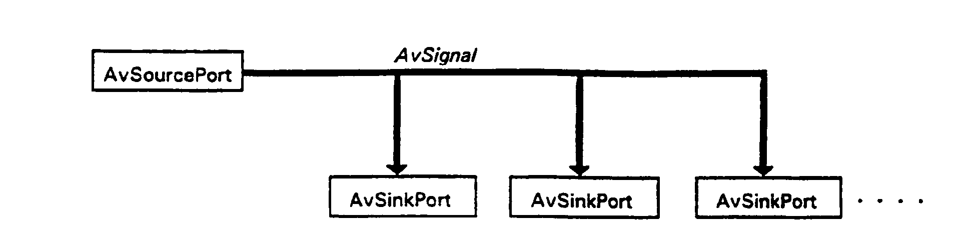 NOTE: AvSignals are directional and hierarchically classified (typed) using ASN. 1 Object Ids.

AvSignals are directional in that they originate at an AvSourcePort and are terminated at one or more AvSinkPorts. More about ports later.

### Audio/Video Stream

The *A VStream* object class represents a "directed container" of either an AvSignal or subordinate AvStreams. Multiple AvStreams can be contained within a common parent AvStream only if the "sub-AvStreams" are related to each other by some constraint, such as synchronization. An AvStream is "directed" in that it originates at an AvSourcePort and is terminated at one or more AvSinkPorts. The containment relationship of an AvStream can be arbitrarily complex.

### Example: an RGB AudioNideo Feed:

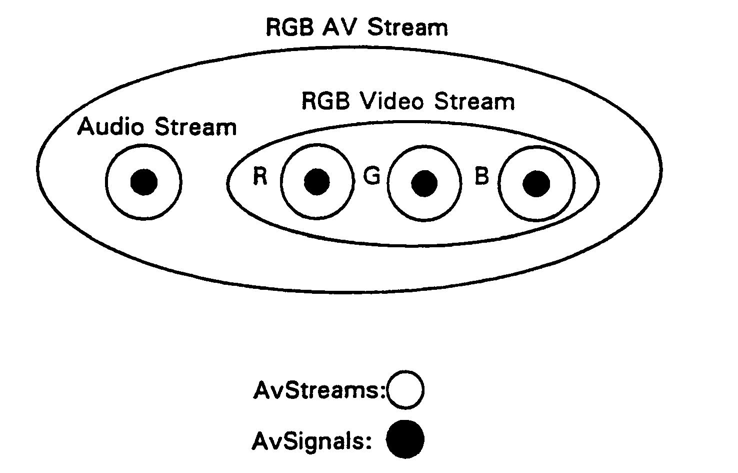

**Definition: *Primitive* AvStream:** A primitive AvStream is an AvStream that contains only an AvSignal.
**Definition: *Complete* AvStream:** A complete AvStream is an AvStream that is not contained by another AvStream.
In general, AvStreams are intended to contain all of the attributes needed to fully describe the AV data that the AvStream represents. This will include some, and possibly a large number of, textual attributes. This idea also extends to the representation of component signals of an alternate form. For instance, an AvStream that represents the audio and video analog outputs from a VCR: if the contained analog AvSignals were routed through an MPEG encoder, that encoder's output AvSignal(s) would also be included in the same AvStream along with their analog cousins. In other words, there is still only one AvStream which contains all of the different representations (digital and analog), in terms of AvSignals, of the original information.

### Audio/Video Source Port

The *AvSourcePort* object class represents the point of origin of a single AvStream and thus the AvSignals which that AvStream contains. More specifically, AvSourcePorts can represent a "physical" source of an AvSignal (primitive AvStream) or some higher level aggregation of AvSourcePorts. The aggregation hierarchy of AvSourcePorts corresponds to that of the AvStream "produced" by that AvSourcePort. Assuming the above AV RGB Feed as an example: there would be a single high level AvSourcePort that "produces" one AvStream in the form of the "RGB AV Stream". This AvSourcePort would then contain two other AvSourcePorts corresponding to the "Audio Stream" and "RGB Video Stream" AvStreams. This hierarchical containment relationship would continue to a point where there were four AvSourcePorts that represent all of the primitive AvStreams, and thus all of the actual "produced" AvSignals. Again, viewed from any level, an AvSourcePort's aggregation structure parallels the AvStream's aggregation that is produced from that AvSourcePort.

**Definition: *Primitive* AvSourcePort:** a primitive AvSourcePort is one which produces a primitive AvStream. Primitive AvSourcePorts actually have AvPrimitiveCircuits (see below - but think wire for now) attached, into which the corresponding AvSignals are injected when active.

**Definition: *Complete* AvSourcePort**: A complete AvSourcePort is one which is not contained by another AvSourcePort.

An AvSourcePort can be in either a "connected" or "disconnected" state. While complete AvSourcePorts are in the connected state, there will be one or more (multi-cast) associated *AvVirtualCircuits* into which it injects its complete AvStream. See the AvVirtualCircuit definition for more information.

It is intended that the AvSourcePort abstraction model physical source port hardware as well as "software" source ports of AvSignals such as software compressors and filters.

Audio/Video Sink Port

The ***AvSinkPort*** object class represents the termination point of a single AvStream. The aggregation hierarchy of an AvSinkPort corresponds to that of the AvStream which it sinks. While the aggregation structures correspond, not all of the component AvSignals may be accessible to, or used by, the AvSinkPort. Using the example of a combined VCR AvStream that has separate audio and video sub-AvStreams: an AvSinkPort on a video monitor would not utilize the audio AvStream even though it is logically available.

**Definition: *Primitive* AvSinkPort:** a primitive AvSinkPort is one which terminates a primitive AvStream. From a physical point of view, a primitive AvSinkPort actually has an AvPrimitiveCircuit attached, from which the corresponding AvSignal can be obtained.

**Definition: *Complete* AvSinkPort:** A complete AvSinkPort is one which is not contained by another AvSinkPort.

An AvSinkPort can be in either a "connected" or "disconnected" state. While complete AvSinkPorts are in the connected state, there is an associated *AvVirtualCircuit* out of which it obtains its (single) complete AvStream.

It is intended that the AvSinkPort abstraction model physical sink port hardware as well as "soft" sink ports of AvSignals for software processes.

### Input Switch Ports

The *AvInputSwitchPort* object class derives its base behavior from the AvSinkPort class and extends that behavior by allowing for one or more "output" AvPrimitiveCircuits which represents the internal switch fabric paths to the various output ports.

### Output Switch Ports

The *AvOutputSwitchPort* object class derives its base behavior from the AvSourcePort class and extends that behavior by allowing for an "input" AvPrimitiveCircuit which represents the internal switch fabric path to the corresponding AvInputSwitchPort.

### Audio/Video Ports in general

The *AvPort* object class is an abstract class that represents all types of ports. In fact, the AvPort class is the parent class of both the AvSourcePort and AvSinkPorts.

### Audio/Video Primitive Circuit

An *AvPrimitiveCircuit* object represents a real world point-to-point, static or dynamic, connection over which AvSignals (primitive AvStreams) travel. An AvPrimitiveCircuit may contain other AvPrimitiveCircuits in a series fashion so as to effect the higher level AvPrimitiveCircuit. It is intended that dynamic connections of either a physical or "soft" nature can be modeled as AvPrimitiveCircuits. Further, the HCS AV network model chosen is one in which a switch fabric is given the responsibility to "produce" an AvPrimitiveCircuit dynamically when requested to do so. After all, once an AvPrimitiveCircuit is created, either through hardwiring or dynamically, through switching, routing, etc., it behaves in the same fashion as any other AvPrimitiveCircuit.

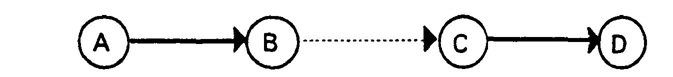

**Example:** AvPrimitiveCircuit AD is composed of AvPrimitiveCircuits AB, BC and CD. AB and CD are static AvPrimitiveCircuits. They correspond to hardwired cable connections that are attached to primitive AvPorts. BC is a dynamically created AvPrimitiveCircuit within a switch fabric. NOTE: Architecturally AB and CD can either be simple direct point-to-point connections, or may contain dynamic AvPrimitiveCircuits in the same form of circuit AD. The complexity of an AvPrimitiveCircuit depends on the complexity of the hardware configuration which it is modeling. By representing the circuit interconnections in this hierarchical fashion, a wide range of hardware architectures can be accommodated.

Notice that AvPrimitiveCircuits are always directional and bound on one end by one kind of an AvPort and on the other by the other kind of an AvPort.

The intent is that the AvPrimitiveCircuit object class be able to represent both hardware and software A/V transports.

### Audio/Video Switch Fabric

An *AvSwitch* object represents the complete AV switch fabric within an HCS system. The architectural intent is that all switching devices (hardware and software) be combined into a single instance of an AvSwitch. This includes both mechanical and software (or both) implemented solutions. This simplifies the usage of the switch fabric by other AV components. The abstraction presented by an AvSwitch is as a two-dimensional sparse matrix, with inputs in one dimension and outputs in the other.

When requested to do so, an AvSwitch will attempt to create a dynamic AvPrimitiveCircuit between the specified AvInputSwitchPort and AvOutputSwitchPort. This may not always be possible. The assumption is that there can be multiple outputs connected to one input (multi-cast).

### Audio/Video Virtual Circuit

An *AvVirtualCircuit* represents a temporal path, in terms of a set (1 or more) of parallel AvPrimitiveCircuits, over which an AvStream instance is carried. More specifically, an AvVirtualCircuit represents the connection between one complete AvSourcePort and exactly one complete AvSinkPort with the purpose of delivering the complete AvStream being produced. Keep in mind that multiple AvVirtualCircuits may be required just to route all of the desired component AvSignals of an AvStream to their destinations. There may truly be separate destination devices (e.g. Audio vs. Video). In other words, just because a single composite AvStream is produced from one AvSourcePort does not mean that all of its component AvSignals are destined to the same output device, and thus AvSinkPort.

An AvStream is multi-casted to more than one AvSinkPort via multiple AvVirtualCircuits. Because of the hierarchical nature of AvPrimitiveCircuits, AvVirtualCircuits represent, and are associated with, all interconnects over which the actual AvSignals are routed. In other words, in terms of AvPrimitiveCircuits, an AvVirtualCircuit represents the two dimensional array of AvPrimitiveCircuits required to carry an AvStream (or part of it) from one AvSourcePort to one AvSinkPort.

Using the RGB AV Stream above as an example:

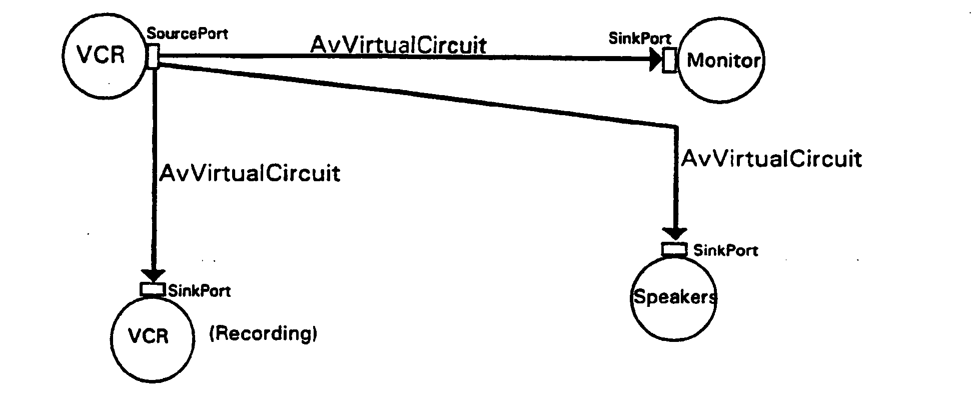

### Audio/Video Program Players and Recorders

Objects that are of the *AvProgramPlayerRecorder* class represent the "devices", both physical and soft, that are the source of all AvSignals, and thus AvStreams within the HCS AV subsystem. Further, some types of AvProgramPlayerRecorders are capable of storing the content of AvStreams (AvSignals, etc...) for later access. AvProgramPlayerRecorders aggregate AvSource/SinkPorts which allow for inclusion of these devices into the AV Network. From a logical perspective, AvProgramPlayerRecorders either interpret the contents of *AvPrograms,* and/or produce AvPrograms when "recording". Architecturally, AvProgramPlayerRecorders can be arbitrarily complex in their implementation and need not represent physical hardware.

One of the important aspects of AvProgramPlayerRecorders is that they know what types of AvPrograms they can interpret.

Some types of AvProgmmPlayerRecorders always deal with a fixed AvProgram. while others can be very dynamic (like those in JukeBoxes).

### Audio/Video Programming

An ***AvProgram*** object instance represents a specific manageable unit of AV information that may be interpreted and presented (in the form of a complete AvStream) by an appropriate type of AvProgramPlayerRecorder. In general. AvPrograms contain all of the information needed to reproduce a complete AvStream similar to one that could have been used to originally create that AvProgram. Architecturally, AvPrograms can range from the very simple to the very complex. If fact. AvPrograms may contain other AvPrograms (even arbitrarily nested). In other words, things as simple as a live radio station broadcast or as complex as stored multimedia presentations can be represented as AvPrograms.

All AvPrograms contain two different types of attributes: descriptive and content. The methods used to represent and access AvProgram content are specific to the various kinds of AvPrograms and as such are not discussed further in this document.

NOTE: The AvProgram abstraction, as with most other aspects of HCS. makes heavy use of ASN. 1 Object Ids for the purpose of hierarchical classification.

The following architectural attributes are common to all types of AvPrograms, and as such, define the base behavior for all AvProgram implementations. These are: *programDescription*, *programType,* and *programLocation.*

**Attribute:** *programDescription:* the programDescription is a short, single line, textual description of the program.

**Attribute:** *program Type:* the programType attribute is an ASN.1 Object Id, with a preamble of 1.11, that classifies a program to a point that all other attributes, including content, can be interpreted; assuming specific knowledge of that type of program. The basic programType name-space is structured as:
1.11.1: Broadcast program
1.11.2.1: Stored program: Single access physical media (e.g. CD, VHS TAPE...)
1.11.2.2: Stored program: Multiple access media (e.g. JPEG image...)

These are the only valid programType value preambles. AvPrograms that are of type 1.11.2.1 can only be used in one AvProgramPlayerRecorder at a time, while AvPrograms of type 1.11.2.2 can be played in multiple AvProgramPlayerRecorders at the same time.

Attribute: *programLocation:* The programLocation attribute is an ASN.1. Object Id, with a preamble of 1.6.1, that identifies the exact location of the AvProgram. The actual meaning of "location" is dependent on the specific type of AvPmgram. This does not mean that there are not architectural requirements placed on this attribute however. The basic programLocation name-space is structured as:
1.6.1.1: AvProgram location: AvProgramPlayerRecorder associated.
1.6.1.2: AvProgram location: AvProgramPlayerRecorder independent.

These are the only-valid programLocation value preambles. It is very important to understand that these preambles classify different types of locations. not programs. In other words, the same type of AvProgram (e.g. VHS tape) could be in a AvProgramPlayerRecorder associated location (like a jukebox), or it may be AvProgramPlayerRecorder independent (like on a shelf). The reason for this architectural distinction between these different kinds of locations is that AvPrograms that are AvProgramPlayerRecorder-associated know how to load themselves. A good example of this is a CD that is in a jukebox. Such an AvProgram knows what jukebox it is in and can instruct that jukebox to load it into an appropriate AvProgramPlayerRecorder (drive).

### Audio/Video Programming Pools

Instances of the ***AvProgranrPool*** object class represent an organized collection of AvPrograms. AvProgramPools provide for the addition, removal, searching, browsing, and indirectly the presentation of their contained AvPrograms. Another aspect of AvProgramPools is that if they can contain (via reference) other AvProgramPools, this "containment" relationship is implemented in such a way as to make the access of sub-AvProgramPools transparent. This allows for the "gluing" together of multiple sub-pools while providing the illusion of a single AvProgramPool. Programatically and architecturally, AvProgramPools provide for shared access and management in a networked environment. To effect this, other programatically-important helper-objects are defined as part of the AvProgramPool object family (like access-cursors and such).

Physical entities such as JukeBoxes and Image Bases will be represented by AvProgramPools.

### AV Spatial Service

The HcsAVSpatialService object class is an abstract class from which spatially and AV oriented classes inherent their behavior. This currently is just a place holder in the classification hierarchy. Audio/Video EntertainmentCenter

The term "entertainment center" is used because it provides a good intuitive "feel" for the behavior of this kind of object. The feel the user should get from an *HcsEntertainmentCenter* is as a collection-, or focal-point where AV sources can be selected and routed to outputs such as speakers, displays, and recorders.

HcsEntertainmentCenters know what their primary A/V outputs are and can automatically present user-selected AvProgramming to these via a "best fit" algorithm. In addition to this automatic mode of operation, HcsEntertainmentCenters also allow complex routing to occur, even outside their natural domain (space). The basic HcsEntenainmentCenter UI design approach is: "simple things are simple to do, but complex things are possible."

One goal is that there only be one kind of HcsEntertainmentCenter implementation.

From a programmatic point of view, the HcsEntenainmentCenter class orchestrates the collection of details that make up a user's request - keeping in mind that a user can change their mind, and do things in an arbitrary order. The important thing to understand is that this "collecting of user intent" is done at a very abstract level.

HcsEntertainmentCenters provide a UI-framework through which other AV objects present their UI components. For example, a AvProgramPlayerRecorder would present itself, and interact with the user, through HcsEntertainmentCenters. Also keep in mind that HcsEntertainmentCenters themselves present their Uls ultimately through different kinds of HcsUserControlPoints and as such tailor their behavior to these different environments.

### Back to the Functionality Model

At this point the reader is encouraged to review object model definitions as there are subtle interrelationships between the classes in this object model.

Let's now take a look at the AV Functionality Model and map the various object classes to the layer of functionality which they implement.

| Layer | Objects |
|---|---|
| Service | HcsAvSpatialServices, HcsAvCollections, and HcsEntertainmentCenters |
| Management | AvSignals, AvStreams, AvPrograms, AvProgramPools, and AvProgmmPlaverRecorders. |
| Network | AvVirtualCircuits, AvPorts, AvSwitch, and A vPrimitiveCircuits |

Each of these layers are discussed below, starting from the Network layer and working up to the Service layer. It is important to understand that the layering indicated by this model does not imply that the lower level kinds of objects (like at the network level) do not know about higher level objects - this is not a layered communications reference model.

### Network Layer

The objects that implement the Network layer of functionality represent the "plumbing" of the AV system. Specifically, the sources, circuits (dynamic and static), routes, and destinations of all AV information. Another way to think about the objects at this level is in terms of information that they contain. At any given time the objects at this level represent a schematic of the interconnections between all AV components in an HCS installation.

The document entitled "HCS AV Network Components Design" defines each object class of this layer in detail.

### Management Layer

The objects that implement the Management Layer of functionality are responsible for managing all devices, processes, and information from an AV viewpoint. This implies device "drivers" in the form of AvProgramPlayerRecorders, and live and stored information through the AvProgram, AvSignal, AvStreams, and AvProgramPool implementations.

This is the layer that does most of the work in terms of actively carrying out user requests.

See the document entitled "HCS AV Management Components Design" for a complete definition of the objects at this level.

### Service Layer

The objects that implement this layer of functionality are responsible for mapping various Management Level components into a natural UI framework for the user. Typically a space-centric approach is used like that of the HcsEntertainmentCenter. If other, nonspace-centric, paradigms are needed, other types of components could be introduced at this level without affecting components at the other levels.

See the document entitled "HCS AV Service Components Design" for a complete definition of the objects at this level.

### APPENDIX 2

There are two basic types of AvPrograms that represent individual broadcast programs: *hcsBrdCstAudioAvPrg,* and *hcsBrdCstVideoAvPrg.* These types are sub-classes of both *hcsBrdCstAvPrg* and thus identify AvProgram types *(hcsAvProgTypeld).* These types (together) are used to represent types of AV broadcast programming.

In order to represent groups of related channels or stations two more types of AvProgram, *hcsBrdCstAudioGrpAvPrg,* and *hcsBrdCstVideoGrpAvPrg* are defined. These are used to aggregate sets of "channels" into a higher level program just as a CD does for CD tracks. This allows a related group of channels to be configured as a set (*e.g.,* all cable TV channels) and "played" as a whole. This approach allows, at the PlayerRecorder MCI level, channels to be switched between just as tracks on a CD are switched now.
MediaManager AvProgram location ids have the form of:
*hcsAvPrgIsInMediaMgr. <mmId>. <location in mm>.*

The *mmId* field is a unique number that represents an instance of an MediaManager within a system. This number is used by the central MediaManager (only one per installation) to forward program load requests to the appropriate MediaManager. The actual format of the *<location in mm >* field is specific to the actual type of AvProgram. For typical JukeBox (a kind of MediaManager) this is a number that maps to a slot in the jukebox. The location id of an AvProgram is unique - an instance of an AvProgram has a unique location in SpaceTime.

### Location ld format: hcsBrdCstAudioGrpAvPrg

The *< location in mm >* field for *hcsBrdCstAudioGrpAvPrg* AvPrograms has the following values:
0 - AM radio signal group
1 - FM radio signal group
2 - DMX audio signal group
NOTE: All sub-programs are of the same type.

### Location Id format: hcsBrdCstVideoGrpAvPrg

The *< location in mm>* field for *hcsBrdCstVideoGrpAvPrg* AvPrograms has the following values:
0 - CATV signal group
1 - Antenna signal group
2 - DSS signal group
NOTE: All sub-programs are of the same type.

### Location Id format : hcsBrdCstAudioAvPrg

The *<location in mm>* field for *hcsBrdCstAudioAvPrg* AvPrograms has the following format:
<type>. < freq> [. < time > ]
where:
< type > :
   0 - AM radio station
   1 - FM radio station
   2 - DMX audio station
< freq > : Station frequency in kilohertz
< time > : Optional. Specifies a time range for the
program. If not present, forever should be assumed.

### Location Id format: hcsBrdCstVideoAvPrg

The *<location in mm>* field for *hcsBrdCstVideoAvPrg* AvPrograms has the following format:
<type>.<chan>[.<time>]
where:
<type> :
   0-CATV channel
   1 - Antenna TV channel
   2 - DSS channel
<chan> : Channel number
< time > : Optional.. Specifies a time range for the
program. If not present, forever should be assumed.

### Hcs Logging Support

All log records are classified using an ASN. 1 Object Id.

Standard Log record ASN. Type Classification:
1.x - All log records
1.x.0 - NonCritical
1.x.0.0 - Trace output
1.x.0.1 - Progress
1.x.1 - Error
1.x.2 - Warning

Log records are composed of four fields of information: type, time, creator, information. Type and time are ASN.1 ids while the creator can be either an

ASN.1 HcsResource instance id or a text string. The information field is the actual text generated by the logging component.

The are various components in the system that are responsible for the collecting, storage, and possible forwarding of log records. All forms of this component are modeled by the HcsLogFacility class.

### HcsLogFacility class

The HcsLogFacility class is an HcsResource derivations who's purpose is to provide storage and forwarding at various levels in the system. There are currently two implementations: the Local Log Facility, and the Central Log Facility. The HcsLogFacility interface is:

```
 class HcsLogFacility : public HcsResource
 {
 public:
        .
        .
        .

        virtual HRESULT putRecord (char* typeAsn1IdStrPtr,
                               char* timeAsn1StrPtr,
                               char* idStrPtr,
                               char* recordPtr) = 0;
  }
```

### The Local Log Facility

An Local Log Facility (LLF) instance exists in every node in the system. The purpose of this HcsLogFacility implementation is to accept all log records from various HCS components on that node and to buffer them in a large circular on disk until they can be delivered to the Central Log Facility (CLF). The intent is that a node could survive for some time if the CLF were to be unavailable. One of the configuration parameters passed to each Local HcsLogFacility instance will be the resource name of the HcsLogFacility through which that instance is to forward its records. The current thinking is that this will be the name of the CLF but this is not an architectural requirement. In other words there could be intermediate levels of HcsLogFacilities placed in the system. In fact on LLF could be configured to forward its records to another LLF. After all a HcsLogFacility is a HcsLogFacility.

### The Central Log Facility

There will be one instance of the Central Log Facility (CLF) instance in the entire system. The purpose of this HcsLogFacility implementation is to accept all log records from various HCS components within the entire system and to provide for the final storage of this information. The intent is that this facility provide for the long term, off line, archival of the entire HCS system log. In addition to this function, it will also provide for the on-line viewing of some portion of the log.

### How log records are written

So the question is: how do HCS components log there information? To provide a standard and safe access to the HcsLogFacilites, there is a class family provided. The family is based at a class called HcsLogPort. This class implements the common behavior of all types of LogPorts and is functional on its own.

Derived from the HcsLogPort are the HcsResourceLogPort and HcsLogFacilityPort classes. The HcsResourceLogPort provide easy support for the resource developer while the HcsLogFacilityPort provides direct access to HcsLogFacilites. In general, the first is used by Resource derivations while the second would be used by resource servers and system components.

```
 class HcsLogPort
 {
 public:
       /* Global Constant AsnObjectIds for all defined log record types --
 SEE INCLUDE FOR TYPE LIST */
       #include <HcsLogRecTypes.h>


 public:
       HcsLogPort (char* idStrPtr);
       virtual ~HcsLogPort (void);
       void put (const Asn1ObjectId* typePtr, char* formatStrPtr, ...) ;
       inline char* getIdStrPtr (void) {return(myIdStrPtr);};
       BOOL setIdStr (char* newIdStrPtr);


       /* Methods to control log filtering */
       void enable (char* asn1IdOfLogRecTypeToEnablePtr);
       void disable (char* asn1IdOfLogRecTypeToDisablePtr);
       BOOL isEnabled (char* asn1IdOfLogRecTypeToChkPtr);
       BOOL isEnabled (const Asn1ObjectId* logRecTypeToChkPtr);
       inline HRESULT dumpFilterState (TextSink* toSinkPtr, int
 maxLineSize)
            {return(myFilter.dumpState(toSinkPtr));};
       inline void resetFilter (void) {myFilter.reset();};


       void forwardRec (const Asn1ObjectId* typePtr, char* timeAsn1StrPtr,
 char* idStrPtr, char* recordPtr) ;
                                   /* used to forward from one
 HcsLogPort implementation to another */


 protected:
       /* Derivation Interface */        /* Defaults to writing errors only to the NT SystemLog */
       virtual void dumpRec(const Asn1ObjectId* typePtr, char*
 timeAsn1StrPtr, char* idStrPtr, char* recordPtr);


 private:
       void putOver (void);
       HcsLogPort (void) ;
       void* operator new (size_t size);


 private:
       char*              myIdStrPtr;
       HANDLE             myHandle;
       DWORD              myIdEvent;
       Asn1Set            myFilter;


 public:
       /* Grand fathered Methods */
       void setTrace (BOOL to);
       void setProgress (BOOL to);
       void setWarning (BOOL to);
       BOOL isTraceEnabled (void);
       BOOL isProgressEnabled (void);
       BOOL isWarningEnabled (void);
       void putError (char* formatStrPtr, ...) ;
       void putWarning (char* formatStrPtr,...);
       void putTrace (char* formatStrPtr, ...);
       void putProgress (char* formatStrPtr, ...);
       void putMaintFailure (char* formatStrPtr, ...);
 };


 /* class used by resource implementors */
 class HcsResourceLogPort : public HcsLogPort
 {
 public:
       HcsResourceLogPort (HcsResourceImp* ownerPtr, char* idStrPtr);
       virtual ~HcsResourceLogPort (void);


 protected:
       /* routes all output through the owning HcsResourceImp's
 putLogRecord private support method */
       void dumpRec(char* typeAsn1IdStrPtr, char* timeAsn1StrPtr, char*
idStrPtr, char* recordPtr);


 private:
       HcsResourceLogPort (void);
       void* operator new (size_t size);
 };


 /* class used by non resource centric implementations */
 class HcsLogFacilityPort : public HcsLogPort
 {
 public:
       HcsLogFacilityPort (char* idStrPtr);
       HcsLogFacilityPort (HcsLogFacility* facilityPtr, char* idStrPtr);
       HRESULT setFacility (HcsLogFacility* facilityPtr);
       HRESULT clearFacility (void);
       BOOL isFacilitySet (void);
 inline BOOL isTapped (void) {return(myIsTapped);};
 inline void setTapOn (void) {myIsTapped = TRUE;};
 inline void setTapOff (void) {myIsTapped = FALSE;};


       virtual ~HcsLogFacilityPort (void);
 protected:
       /* defaults to writing errors only to the NT SystemLog (chicago??)
 unless an HcsLogFacility is made available
              and is functioning */
       void dumpRec (const AsnlObjectId* typePtr, char* timeAsn1StrPtr,
 char* idStrPtr, char* recordPtr);


 private:
       HcsLogFacilityPort (void) ;
       void* operator new (size_t size) ;


 private:
       HcsLogFacilityOlePtr myFacOlePtr;
       BOOL mylsFacSet;
    BOOL myIsTapped;
 } ;
```

Effects on the HcsResourceImp Interface
HcsResourceImp::putLogRecord implementation: keeps and internal
HcsLogFacilityPort instance which is used to forward records through.
Before a record is actually forwarded, HcsResourceImp checks to make sure an
HcsLogFacility has been assign to its port. If this is not the case, an attempt is made to locate the local HcsLogFacility for that node via the HcsResrcBusIf :locateLocalResourceById method (new). In any case, the log record is written to the via the resource instance's HcsLogFacilityPort.

New: The HcsResource interface defines, and the HcsResourceImp implements,
two methods:
HRESULT enableLogging ([in, string]char* forLogRecClassPtr);
HRESULT disableLogging ([in, string]char* forLogRecClassPtr);

These are used by support to enable and disable logging dynamically within instances of HcsResources.

### The HcsLogFacility class and HcsLogFacilityPorts

Notice that any HcsLogFacility can be referenced by a HcsLogFacilityPort. This means that some components may wish to connect directly to the CLF. A good example of this may be the Resource Bus Manager (RBMGR.EXE).

## Claims

1. An audio/visual system, comprising:
at least one output component (1101) having at least one source port for each type of output signal output from the at least one output component and at least one source port object for each of said at least one source port; and
at least one input component (1102, 1103) having at least one sink port for each type of input signal input to the at least one input component and at least one sink port object for each at least one sink port,
wherein each at least one source port of said at least one output component is connectable to said at least one sink port of said at least one input component via at least one primitive circuit path wherein the primitive circuit path comprises a virtual circuit.

2. An audio/visual system according to claim 1, further including at least one primitive circuit object for each at least one primitive circuit path with a signal at least one of (A) originating from a source port and (B) terminating at a sink port.

3. An audio/visual system according to claim 1, wherein the at least one primitive circuit path between the at least one source port and the at least one sink port is at least one of a static path and a dynamic path.

4. An audio/visual system according to claim 1, further including at least one switching mechanism having at least one input switching port and at least one output switching port, wherein a switching mechanism of the at least one switching mechanism is adapted to enable the at least one input switching port associated with the switching mechanism to be connected to the at least one output switching port associated with the switching mechanism, thereby establishing at least one dynamic path between the at least one input switching port and the at least one output switching port.

5. An audio/visual system according to claim 1, wherein said at least one source port object and said at least one sink port object are derived from a port object class, and member functions of said port object class include at least one of a function that is adapted to return a reference to the owner object of at least one instance of the port object class, a function that is adapted to return an indication as to whether at least one instance of the port object class is a complete port, a function that is adapted to return an indication as to whether at least one instance of the port object class is a primitive port, a function that is adapted to return a reference to the parent port of at least one instance of the port object class, a function that is adapted to return the number of child ports of at least one instance of the port object class and a function that is adapted to return a reference to a child port for at least one instance of the port object class.

6. An audio/visual system according to claim 1, wherein a wire protocol-based approach is utilized that supports the semantics of said at least one output component and said at least one input component.

7. An audio/visual system according to claim 1, further including a switching mechanism that is adapted to connect said at least one source port of said at least one output component to said at least one sink port of said at least one input component and wherein the connecting by said switching mechanism includes dynamically allocating a stream transport resource.

8. An audio/visual system according to claim 7, wherein said switching mechanism is a hierarchically nested switching mechanism.

9. An audio/visual system according to claim 1, wherein said at least one output component includes at least one of (A) a display component and (B) a speaker system component, wherein a display object represents a display component and a speaker system object represents a speaker system component.

10. An audio/visual system according to claim 9, wherein a speaker system component includes a sink port and wherein a display component includes a sink port.

11. An audio/visual system according to claim 1, further comprising:
at least one entertainment session; and
at least one player/recorder component associated with each entertainment session including at least one output component, wherein a player/recorder component is a type of source object.

12. An audio/visual system according to claim 11, wherein each entertainment session includes a process for assigning a program to the entertainment session, the system being adapted to:
invoke a function to select an audio/visual program entry thereby returning a reference to the audio/visual program entry, and
invoke a set current program function of the entertainment session object passing the reference to the audio/visual program entry.

13. An audio/visual system according to claim 11, wherein each entertainment session includes a process for selecting a program for die entertainment session, the system being adapted to:
display a user interface that allows a user to browse through the programs associated with a program pool data structure;
select a program via the user interface; and
set a return reference to a reference to a program object associated with the selected program.

14. An audio/visual system according to claim 11, wherein each entertainment session includes a process for selecting a program for the entertainment session, the system being adapted to:
input a program monitored by the entertainment session; and
automatically select by the entertainment session a program object related to the input program.

15. An audio/visual system according to claim 11, wherein a space object is associated with each entertainment session designating its space, and a player/recorder object is associated with each player/recorder component.

16. An audio/visual system according to claim 11, wherein an entertainment session of said at least one entertainment session provides a behavior that allows an audio/visual program to be assigned to a player/recorder component, and whereby when an audio/visual program is assigned to an entertainment session, the entertainment session is adapted to load the audio/visual program into a player/recorder, is adapted to cause the program to be played by the player/recorder and is adapted to route at least one output signal of the player/recorder component to at least one associated output component.

17. An audio/visual system according to claim 11, wherein an entertainment session is adapted to provide a user interface component for controlling at least one user interface of at least one of (A) at least one input component and (B) at least one output component associated with the entertainment session.

18. An audiolvisual system according to claim 11, further comprising:
a program pool data structure hierarchically representing a set of audio/visual program entries, whereby each audio/visual program entry has a corresponding program pool data structure.

19. An audio/visual system according to claim 18, wherein the program pool data structure at least one of (A) provides a behavior to browse through the hierarchy of the audio/visual program entries represented by the program pool data structure, (B) allows a player/recorder component to be assigned to an audio/visual program entry of the program pool data structure, (C) provides a behavior corresponding to the loading of an audio/visual program entry into a player/recorder component and (0) allows an entertainment session to be created by a session manager.

20. An audio/visual system according to claim 1, further comprising:
at least one media manager object is adapted for managing media at its location and for providing at least one appropriate object, as determined by the at least one media manager object, for the media managed by the at least one media manager object.

21. An audio/visual system according to claim 20, wherein a media manager object includes a load program function that is passed an audio/visual program entry and that is adapted to return at least one appropriate object with the program corresponding to the audio/visual program entry loaded.

22. A method for establishing a path between a output component and an input component in an audio/visual system comprising at least one output component (1101) having least one source port is adapted to support each type of output signal output from the at least one output component and at least one primitive source port object for each of said at least one source port; and at least one input component (1102, 1103) having at least one sink port is adapted to support each type of input signal input to the at least one input component and a primitive sink port object for each sink port, wherein each at least one source port of said at least one output component is connectable to said at least one sink port of said at least one input component via at least one primitive circuit path, including:
instantiating a virtual circuit object that establishes a path between the source port corresponding to the complete source port object and the sink port corresponding to the complete sink port object.

23. A method according to claim 22, further including:
establishing a primitive circuit path using an output object that represents the output component and an input object that represents the input component.

24. A method according to claim 22, further including:
requesting the output object to provide a reference to a complete source port object;
requesting the complete source port object to provide a reference to its corresponding complete stream object; and
requesting the input object to provide a reference to its corresponding complete sink port object.

25. A method according to claim 22, wherein the sink port and the source port are included in the same port.

26. A method according to claim 22, wherein said instantiating includes hosting the virtual circuit object by the source port.

27. A method according to claim 22, wherein said method further includes:
invoking a create virtual circuit function wherein said invoking includes passing a reference to the sink port object;
in response to said invoking, constructing a new virtual circuit object wherein said constructing includes passing to a constructor a reference to the source port object and a reference to the sink port object; and
adding the new virtual circuit object to a list of virtual circuits associated with the source port object.

28. A method according to any one of claims 22 to 27, wherein said method further comprises:
connecting at least one source port of at least one output component to at least one sink port of at least one input component via at least one primitive circuit path;
wherein each of said at least one output component includes at least one source port for each type of output signal output from the at least one output component and at least one source port object for each of said at least one source port, and
wherein each of said at least one input component includes at least one sink port for each type of input signal input to the at least one input component and at least one sink port object for each at least one sink port.

## Patentansprüche

1. Audio-/visuelles System, das umfasst:
wenigstens eine Ausgangskomponente (1101), die wenigstens einen Quellen-Anschluss für jeden Typ Ausgangssignal, das von der wenigstens einer Ausgangskomponente ausgegeben wird, und wenigstens ein Quellen-Anschluss-Objekt für jeden von dem wenigstens einen Quellen-Anschluss hat; und
wenigstens eine Eingangskomponente (1102, 1103), die wenigstens einen Senken-Anschluss (sink port) für jeden Typ Eingangssignal, das in die wenigstens eine Eingangskomponente eingegeben wird, und wenigstens ein Senken-Anschluss-Objekt für jeden wenigstens einen Senken-Anschluss hat,
wobei jeder wenigstens eine Quellen-Anschluss der wenigstens einen Ausgangskomponente mit dem wenigstens einen Senken-Anschluss der wenigstens einen Eingangskomponente über wenigstens einen Primitivschaltungsweg (primitive circuit path) verbunden werden kann, wobei der Primitivschaltungsweg eine virtuelle Schaltung umfasst.

2. Audio-/visuelles System nach Anspruch 1, das des Weiteren wenigstens ein Primitivschaltungs-Objekt für jeden der wenigstens einen Primitivschaltungswege mit einem Signal enthält, das wenigstens (A) von einem Quellen-Anschluss ausgeht, oder (B) an einem Senken-Anschluss endet.

3. Audio-/visuelles System nach Anspruch 1, wobei der wenigstens eine Primitivschaltungsweg zwischen dem wenigstens einem Quellen-Anschluss und dem wenigstens einem Senken-Anschluss wenigstens ein statischer Weg (static path) oder ein dynamischer Weg (dynamic path) ist.

4. Audio-/visuelles System nach Anspruch 1, das des Weiteren wenigstens einen Schaltmechanismus enthält, der wenigstens einen Eingangs-Schaltanschluss und wenigstens einen Ausgangs-Schaltanschluss aufweist, wobei ein Schaltmechanismus des wenigstens einen Schaltmechanismus so eingerichtet ist, dass er ermöglicht, dass der wenigstens eine Eingangs-Schaltanschluss, der mit dem Schaltmechanismus zusammenhängt, mit dem wenigstens einen Ausgangs-Schaltanschluss verbunden wird, der mit dem Schaltmechanismus zusammenhängt, um so wenigstens einen dynamischen Weg zwischen dem wenigstens einem Eingangs-Schaltanschluss und dem wenigstens einen Ausgangs-Schaltanschluss herzustellen.

5. Audio-/visuelles System nach Anspruch 1, wobei das wenigstens eine Quellen-Anschluss-Objekt und das wenigstens eine Senken-Anschluss-Objekt von einer Anschluss-Objektklasse hergeleitet werden und Mitgliedsfunktionen der Anschluss-Objektklasse wenigstens eine Funktion, die so eingerichtet ist, dass sie einen Bezug zu dem Eigner-Objekt wenigstens einer Instanz zu der Anschluss-Objektklasse zurückführt, eine Funktion, die so eingerichtet ist, dass sie eine Anzeige dahingehend zurückführt, ob wenigstens eine Instanz der Anschluss-Objektklasse ein vollständiger Anschluss ist, eine Funktion, die so eingerichtet ist, dass sie eine Anzeige dahingehend zurückführt, ob wenigstens eine Instanz der Anschluss-Objektklasse ein Primitiv-Anschluss ist, eine Funktion, die so eingerichtet ist, dass sie einen Bezug zu dem Eltern-Anschluss wenigstens einer Instanz der Anschluss-Objektklasse zurückführt, eine Funktion, die so eingerichtet ist, dass sie die Anzahl von Kind-Anschlüssen wenigstens einer Instanz der Anschluss-Objektklasse oder eine Funktion einschließen, die so eingerichtet ist, dass sie einen Bezug zu einem Kind-Anschluss für wenigstens eine Instanz der Anschluss-Objektklasse zurückführt.

6. Audio-/visuelles System nach Anspruch 1, wobei ein Verfahren auf Wire-Protocol-Basis eingesetzt wird, das die Semantik der wenigstens einen Ausgangskomponente und der wenigstens einen Eingangskomponente unterstützt.

7. Audio-/visuelles System nach Anspruch 1, das des Weiteren einen Schaltmechanismus enthält, der so eingerichtet ist, dass er den wenigstens einen Quellen-Anschluss der wenigstens einen Ausgangskomponente mit dem wenigstens einen Senken-Anschluss der wenigstens einen Eingangskomponente verbindet, und wobei das Verbinden durch den Schaltmechanismus dynamisches Zuweisen einer Strom-Transportressource einschließt.

8. Audio-/visuelles System nach Anspruch 7, wobei der Schaltmechanismus ein hierarchisch verschachtelter Schaltmechanismus ist.

9. Audio-/visuelles System nach Anspruch 1, wobei die wenigstens eine Ausgangskomponente wenigstens (A) eine Anzeigekomponente oder (B) eine Lautsprechersystem-Komponente enthält, wobei ein Anzeige-Objekt eine Anzeigekomponente darstellt und ein Lautsprechersystem-Objekt eine Lautsprechersystem-Komponente darstellt.

10. Audio-/visuelles System nach Anspruch 9, wobei eine Lautsprechersystem-Komponente einen Senken-Anschluss enthält und eine Anzeige-Komponente einen Senken-Anschluss enthält.

11. Audio-/visuelles System nach Anspruch 1, das des Weiteren umfasst:
wenigstens eine Unterhaltungs-Session; und
wenigstens eine Player-/Recorder-Komponente, die mit jeder Unterhaltungs-Session zusammenhängt und wenigstens eine Ausgangskomponente enthält, wobei eine Player-/Recorder-Komponente ein Typ Quellen-Objekt ist.

12. Audio-/visuelles System nach Anspruch 11, wobei jede Unterhaltungs-Session einen Prozess zum Zuweisen eines Programms zu der Unterhaltungs-Session einschließt und das System so eingerichtet ist, dass es:
eine Funktion zum Auswählen eines audiovisuellen Programmeintrags aufruft, um so einen Bezug zu dem audiovisuellen Programmeintrag zurückzuführen, und
eine eingestellte aktuelle Programmfunktion des Unterhaltungs-Session-Objektes aufruft und den Bezug zu dem audiovisuellen Programmeintrag weiterleitet.

13. Audio-/visuelles System nach Anspruch 11, wobei jede Unterhaltungs-Session einen Prozess zum Auswählen eines Programms für die Unterhaltungs-Session einschließt und das System so eingerichtet ist, dass:
eine Benutzerschnittstelle angezeigt wird, die es einem Benutzer gestattet, durch die Programme zu blättern, die mit einer Programmangebot-Datenstruktur zusammenhängen;
ein Programm über die Benutzerschnittstelle ausgewählt wird; und
ein Rückführbezug zu einem Bezug auf ein Programmobjekt festgelegt wird, das mit dem ausgewählten Programm zusammenhängt.

14. Audio-/visuelles System nach Anspruch 11, wobei jede Unterhaltungs-Session einen Prozess zum Auswählen eines Programms für die Unterhaltungs-Session einschließt, und das System so eingerichtet ist, dass
ein durch die Unterhaltungs-Session überwachtes Programm eingegeben wird; und
ein auf das eingegebene Programm bezogenes Programmobjekt durch die Unterhaltungs-Session automatisch ausgewählt wird.

15. Audio-/visuelles System nach Anspruch 11, wobei ein Raum-Objekt mit jeder Unterhaltungs-Session zusammenhängt und ihren Raum bezeichnet und ein Player-/Recorder-Objekt mit jeder Player-/Recorder-Komponente zusammenhängt.

16. Audio-/visuelles System nach Anspruch 11, wobei eine Unterhaltungs-Session der wenigstens einen Unterhaltungs-Session ein Verhalten bereitstellt, das es gestattet, ein Audio-/visuelles Programm einer Player-/Recorder-Komponente zuzuweisen, und wobei, wenn ein Audio-/visuelles Programm einer Unterhaltungs-Session zugewiesen wird, die Unterhaltungs-Session so eingerichtet ist, dass sie das audiovisuelle Programm in einen Player-/Recorder lädt, und so eingerichtet ist, dass sie veranlasst, dass das Programm durch den Player-/Recorder abgespielt wird, und so eingerichtet ist, dass sie wenigstens ein Ausgangssignal der Player-/Recorder-Komponente zu wenigstens einer damit zusammenhängenden Ausgangskomponente leitet.

17. Audio-/visuelles System nach Anspruch 11, wobei eine Unterhaltungs-Session so eingerichtet ist, dass sie eine Benutzerschnittstellenkomponente zum Steuern wenigstens einer Benutzerschnittstelle wenigstens (A) wenigstens einer Eingangskomponente oder (B) der wenigstens einer Ausgangskomponente bereitstellt, die mit der Unterhaltungs-Session zusammenhängt.

18. Audio-/visuelles System nach Anspruch 11, das des Weiteren umfasst:
eine Programmauswahl-Datenstruktur, die hierarchisch einen Satz audiovisueller Programmeinträge darstellt, wobei jeder audiovisuelle Programmeintrag eine entsprechende Programmangebot-Datenstruktur hat.

19. Audio-/visuelles System nach Anspruch 18, wobei die Programmangebot-Datenstruktur wenigstens (A) ein Verhalten zum Durchsuchen der Hierarchie der audiovisuellen Programmeinträge bereitstellt, die durch die Programmangebot-Datenstruktur dargestellt werden, (B) zulässt, dass eine Player-/Recorder-Komponente einem audiovisuellen Programmeintrag der Programmangebote-Datenstruktur zugewiesen wird, (C) ein Verhalten bereitstellt, das das Laden eines audiovisuellen Programmeintrags einer Player-/Recorder-Komponente entspricht, oder (D) zulässt, dass eine Unterhaltungs-Session durch einen Session-Manager erzeugt wird.

20. Audio-/visuelles System nach Anspruch 1, das des Weiteren umfasst:
dass wenigstens ein Medien-Manager-Objekt so eingerichtet ist, dass es Medien an seinem Standort verwaltet, und wenigstens ein durch das wenigstens eine Medien-Manager-Objekt bestimmtes geeignetes Objekt für die durch das wenigstens eine Medien-Manager-Objekt verwalteten Medien bereitstellt.

21. Audio-/visuelles System nach Anspruch 20, wobei ein Medien-Manager-Objekt eine Programmladefunktion einschließt, die einem audiovisuellen Programmeintrag zugeleitet wird und die so eingerichtet ist, dass sie wenigstens ein geeignetes Objekt mit dem Programm zurückführt, das dem geladenen audiovisuellen Programmeintrag entspricht.

22. Verfahren zum Einrichten eines Weges zwischen einer Ausgangskomponente und einer Eingangskomponente in einem Audio-/visuellen System, das wenigstens eine Ausgangskomponente (1101), die wenigstens einen Quellen-Anschluss, der so eingerichtet ist, dass er jeden Typ Ausgangssignal unterstützt, das von der wenigstens einen Ausgangskomponente ausgegeben wird, und wenigstens ein Primitiv-Quellen-Anschluss-Objekt (primitive source port object) für jeden wenigstens einen Quellen-Anschluss hat; sowie wenigstens eine Eingangskomponente (1102, 1103) umfasst, die wenigstens einen Senken-Anschluss (sink port), der so eingerichtet ist, dass er jeden Typ Eingangssignal unterstützt, das in die wenigstens einen Eingangskomponente eingegeben wird, sowie ein Primitiv-Senken-Anschluss-Objekt (primitive sink port object) für jeden Senken-Anschluss hat, wobei jeder wenigstens eine Quellen-Anschluss der wenigstens einen Ausgangskomponente mit dem wenigstens einen Senken-Anschluss der wenigstens einen Eingangs-Komponente über wenigstens einen Primitiv-Schaltungsweg (primitive circuit path) verbunden werden kann, wobei das Verfahren umfasst:
Instantiieren eines virtuellen Schaltungsobjektes, das einen Weg zwischen dem Quellen-Anschluss, der dem vollständigen Quellen-Anschluss-Objekt entspricht, und dem Senken-Anschluss einrichtet, der dem vollständigen Senken-Anschluss-Objekt entspricht.

23. Verfahren nach Anspruch 22, das des Weiteren einschließt:
Einrichten eines Primitiv-Schaltungsweges unter Verwendung eines Ausgangs-Objektes, das die Ausgangs-Komponente darstellt, und eines Eingangs-Objektes, das die Eingangs-Komponente darstellt.

24. Verfahren nach Anspruch 22, das des Weiteren einschließt:
Anfordern, dass das Ausgangs-Objekt einen Bezug zu einem vollständigen Quellen-Anschluss-Objekt bereitstellt;
Anfordern, dass das vollständige Quellen-Anschluss-Objekt einen Bezug zu seinem entsprechenden vollständigen Stream-Objekt bereitstellt; und
Anfordern, dass das Eingangs-Objekt einen Bezug zu seinem entsprechenden vollständigen Senken-Anschluss-Objekt bereitstellt.

25. Verfahren nach Anspruch 22, wobei der Senken-Anschluss und der Quellen-Anschluss in dem gleichen Anschluss enthalten sind.

26. Verfahren nach Anspruch 22, wobei das Instantüeren Hosting des virtuellen Schaltungsobjektes durch den Quellen-Anschluss einschließt.

27. Verfahren nach Anspruch 22, wobei das Verfahren des Weiteren einschließt:
Aufrufen einer Funktion zum Erzeugen einer virtuellen Schaltung, wobei das Aufrufen ein Leiten eines Bezugs zu dem Senken-Anschluss-Objekt einschließt;
in Reaktion auf das Aufrufen Konstruieren eines neuen virtuellen Schaltungsobjektes, wobei das Konstruieren Leiten eines Bezuges zu dem Quellen-Anschluss-Objekt und eines Bezuges zu dem Senken-Anschluss-Objekt zu einer Konstruktionseinrichtung einschließt; und
Hinzufügen des neuen virtuellen Schaltungsobjektes zu einer Liste virtueller Schaltungen, die mit dem Quellen-Anschluss-Objekt zusammenhängen.

28. Verfahren nach einem der Ansprüche 22 bis 27, wobei das Verfahren des Weiteren umfasst:
Verbinden wenigstens eines Quellen-Anschlusses wenigstens einer Ausgangskomponente mit wenigstens einem Senken-Anschluss wenigstens einer Eingangskomponente über wenigstens einen Primitiv-Schaltungsweg;
wobei jede der wenigstens einen Ausgangskomponente wenigstens einen Quellen-Anschluss für jeden Typ Ausgangssignal, das von der wenigstens einen Ausgangs-Komponente ausgegeben wird, und wenigstens ein Quellen-Anschluss-Objekt für jeden von dem wenigstens einen Quellen-Anschluss enthält, und
wobei jede der wenigstens einen Eingangskomponente wenigstens einen Senken-Anschluss für jeden Typ Eingangssignal, das in die wenigstens einen Eingangskomponente eingegeben wird, und wenigstens ein Senken-Anschluss-Objekt für jeden von dem wenigstens einen Senken-Anschluss enthält.

## Revendications

1. Système audiovisuel, comprenant :
au moins un composant de sortie (1101) ayant au moins un port source pour chaque type de signal de sortie provenant du composant de sortie et au moins un objet de port source pour chaque port source ; et
au moins un composant d'entrée (1102, 1103) ayant au moins un port de bloc récepteur pour chaque type de signal d'entrée entrant dans le composant d'entrée et au moins un objet de port de bloc récepteur pour chaque port de bloc récepteur,
dans lequel chaque port source dudit composant de sortie peut être relié audit port de bloc récepteur dudit composant d'entrée par chemin de circuit primitif dans lequel le chemin de circuit primitif comprend un circuit virtuel.

2. Système audiovisuel selon la revendication 1, comprenant en outre au moins un objet de circuit primitif pour chaque chemin de circuit primitif avec l'un au moins d'un signal (A) provenant d'un port source et (B) se terminant au niveau d'un port de bloc récepteur.

3. Système audiovisuel selon la revendication 1, dans lequel le chemin de circuit primitif entre le port source et le port de bloc récepteur est l'un au moins d'un chemin statique et d'un chemin dynamique.

4. Système audiovisuel selon la revendication 1, comprenant en outre au moins un mécanisme de commutation ayant au moins un port de commutation d'entrée et au moins un port de commutation de sortie, dans lequel un mécanisme de commutation du mécanisme de commutation est conçu pour valider le port de commutation d'entrée associé au mécanisme de commutation à relier au port de commutation de sortie commutation de sortie associé au mécanisme de commutation, établissant de ce fait au moins un chemin dynamique entre le port de commutation d'entrée et le port de commutation de sortie.

5. Système audiovisuel selon la revendication 1, dans lequel ledit objet de port source et ledit objet de port de bloc récepteur sont obtenus à partir d'une classe d'objets de port, et des fonctions d'élément de ladite classe d'objets de port comprennent l'une au moins d'une fonction qui est conçue pour renvoyer une référence à l'objet de propriétaire d'au moins une instance de la classe d'objets de port, d'une fonction qui est conçue pour renvoyer une indication quant à savoir si au moins une instance de la classe d'objets de port est un port complet, d'une fonction qui est conçue pour renvoyer une indication quant à savoir si au moins une instance de la classe d'objets de port est un port primitif, d'une fonction qui est conçue pour renvoyer une référence au port parent d'au moins une instance de la classe d'objets de port, d'une fonction qui est conçue pour renvoyer le nombre de ports enfant d'au moins une instance de la classe d'objets de port et d'une fonction qui est conçue pour renvoyer une référence à un port enfant pour au moins une instance de la classe d'objets de port.

6. Système audiovisuel selon la revendication 1, dans lequel une approche à base de protocole filaire est utilisée, laquelle supporte la sémantique dudit composant de sortie et dudit composant d'entrée.

7. Système audiovisuel selon la revendication 1, comprenant en outre un mécanisme de commutation qui est conçu pour relier ledit port source dudit composant de sortie audit port de bloc récepteur dudit composant d'entrée et dans lequel la connexion par ledit mécanisme de commutation comprend l'allocation dynamique d'une ressource de transport de flot.

8. Système audiovisuel selon la revendication 7, dans lequel ledit mécanisme de commutation est un mécanisme de commutation hiérarchiquement imbriqué.

9. Système audiovisuel selon la revendication 1, dans lequel ledit composant de sortie comprend l'un au moins (A) d'un composant d'affichage et (B) d'un composant de système de haut-parleur, dans lequel un objet d'affichage représente un composant d'affichage et un objet de système de haut-parleur représente un composant de système de haut-parleur.

10. Système audiovisuel selon la revendication 9, dans lequel un composant de système de haut-parleur comprend un port de bloc récepteur et dans lequel un composant d'affichage comprend un port de bloc récepteur.

11. Système audiovisuel selon la revendication 1, comprenant en outre :
au moins une session de divertissement ; et
au moins un composant lecteur / enregistreur associé à chaque session de divertissement comprenant au moins un composant de sortie, dans lequel un composant lecteur/ enregistreur est un type d'objet source.

12. Système audiovisuel selon la revendication 11, dans lequel chaque session de divertissement comprend un processus pour attribuer un programme à la session de divertissement, le système étant conçu pour :
invoquer une fonction pour sélectionner une entrée de programme audiovisuel renvoyant de ce fait une référence à l'entrée de programme audiovisuel, et
invoquer une fonction de programme courant fixé de l'objet de session de divertissement passant la référence à l'entrée de programme audiovisuel.

13. Système audiovisuel selon la revendication 11, dans lequel chaque session de divertissement comprend un processus pour sélectionner un programme pour la session de divertissement, le système étant conçu pour :
afficher une interface utilisateur qui permet à un utilisateur de naviguer dans les programmes associés à une structure de données d'ensemble de programmes ;
sélectionner un programme par l'intermédiaire de l'interface utilisateur ; et
paramétrer une référence de retour à une référence à un objet de programme associé au programme sélectionné.

14. Système audiovisuel selon la revendication 11, dans lequel chaque session de divertissement comprend un processus pour sélectionner un programme pour la session de divertissement, le système étant conçu pour :
entrer un programme contrôlé par la session de divertissement ; et
sélectionner automatiquement par la session de divertissement un objet de programme lié au programme d'entrée.

15. Système audiovisuel selon la revendication 11, dans lequel un objet d'espace est associé à chaque session de divertissement désignant son espace, et un objet de lecteur / enregistreur est associé à chaque composant lecteur / enregistreur.

16. Système audiovisuel selon la revendication 11, dans lequel une session de divertissement définit un comportement qui permet à un programme audiovisuel d'être attribué à un composant lecteur / enregistreur de sorte que, lorsqu'un programme audiovisuel est attribué à une session de divertissement, la session de divertissement est conçue pour charger le programme audiovisuel dans un lecteur / enregistreur, pour amener le programme à être joué par le lecteur / enregistreur et pour acheminer au moins un signal de sortie du composant lecteur / enregistreur vers au moins un composant de sortie associé.

17. Système audiovisuel selon la revendication 11, dans lequel une session de divertissement est conçue pour fournir un composant d'interface utilisateur pour commander au moins une interface utilisateur de l'un au moins (A) d'au moins un composant d'entrée et (B) d'au moins un composant de sortie associés à la session de divertissement.

18. Système audiovisuel selon la revendication 11, comprenant en outre :
une structure de données d'ensemble de programmes représentant hiérarchiquement un ensemble d'entrées de programmes audiovisuels, de sorte que chaque entrée de programme audiovisuel possède une structure de données d'ensemble de programmes correspondante.

19. Système audiovisuel selon la revendication 18, dans lequel la structure de données d'ensemble de programmes effectue l'une au moins des actions (A) de définir un comportement pour naviguer dans la hiérarchie des entrées de programmes audiovisuels représentées par la structure de données d'ensemble de programmes, (B) de permettre à un composant lecteur / enregistreur d'être attribué à une entrée de programme audiovisuel de la structure de données d'ensemble de programmes, (C) de définir un comportement correspondant au chargement d'une entrée de programme audiovisuel dans un composant lecteur / enregistreur et (D) de permettre à une session de divertissement d'être créée par un gestionnaire de session.

20. Système audiovisuel selon la revendication 1, comprenant en outre :
au moins un objet de gestionnaire de médias qui est conçu pour gérer des médias à son emplacement et pour fournir au moins un objet approprié, comme le détermine l'objet de gestionnaire de médias, pour les médias gérés par l'objet de gestionnaire de médias.

21. Système audiovisuel selon la revendication 20, dans lequel un objet de gestionnaire de médias comprend une fonction de chargement de programme à laquelle on transmet une entrée de programme audiovisuel et qui est conçu pour renvoyer au moins un objet approprié avec le programme correspondant à l'entrée de programme audiovisuel chargée.

22. Procédé pour établir un chemin entre un composant de sortie et un composant d'entrée dans un système audiovisuel comprenant au moins un composant de sortie (1101) ayant au moins un port source qui est conçu pour supporter chaque type de signal de sortie provenant du composant de sortie et au moins un objet de port source primitif pour chaque port source ; et au moins un composant d'entrée (1102, 1103) ayant au moins un port de bloc récepteur qui est conçu pour supporter chaque type de signal d'entrée entrant dans le composant d'entrée et un objet de port de bloc récepteur primitif pour chaque port de bloc récepteur, dans lequel chaque port source dudit composant de sortie peut être relié audit port de bloc récepteur dudit composant d'entrée par l'intermédiaire d'au moins un chemin de circuit primitif, comprenant :
l'instanciation d'un objet de circuit virtuel qui établit un chemin entre le port source correspondant à l'objet de port source complet et le port de bloc récepteur correspondant à l'objet de port de bloc récepteur complet.

23. Procédé selon la revendication 22, comprenant en outre :
l'établissement d'un chemin de circuit primitif en utilisant un objet de sortie qui représente le composant de sortie et un objet d'entrée qui représente le composant d'entrée.

24. Procédé selon la revendication 22, comprenant en outre :
la demande de l'objet de sortie pour fournir une référence à un objet de port source complet ;
la demande de l'objet de port source complet pour fournir une référence à son objet de flux complet correspondant ; et
la demande de l'objet d'entrée pour fournir une référence à son objet de port de bloc récepteur complet correspondant.

25. Procédé selon la revendication 22, dans lequel le port de bloc récepteur et le port source sont inclus dans le même port.

26. Procédé selon la revendication 22, dans lequel ladite instanciation comprend l'hébergement de l'objet de circuit virtuel par le port source.

27. Procédé selon la revendication 22, dans lequel ledit procédé comprend en outre :
l'invocation d'une fonction de création de circuit virtuel, dans laquelle ladite invocation comprend le passage d'une référence à l'objet de port de bloc récepteur ;
en réponse à ladite invocation, la construction d'un nouvel objet de circuit virtuel, dans laquelle ladite invocation comprend le passage à un dispositif de construction d'une référence à l'objet de port source et d'une référence à l'objet de port de bloc récepteur ; et
l'ajout du nouvel objet de circuit virtuel à une liste de circuits virtuels associés à l'objet de port source.

28. Procédé selon l'une quelconque des revendications 22 à 27, dans lequel ledit procédé comprend en outre :
la connexion d'au moins un port source d'au moins un composant de sortie à au moins un port de bloc récepteur d'au moins un composant d'entrée par l'intermédiaire d'au moins un chemin de circuit primitif ;
dans lequel chaque composant de sortie comprend au moins un port source pour chaque type de signal de sortie provenant du composant de sortie et au moins un objet de port source pour chaque port source, et
dans lequel chaque composant d'entrée comprend au moins un port dé bloc récepteur pour chaque type de signal d'entrée entrant dans au moins un composant d'entrée et au moins un objet de port de bloc récepteur pour chaque port de bloc récepteur.
